(19)

**Europäisches Patentamt**
**European Patent Office**
**Office européen des brevets**

(11) **EP 2 573 712 B1**

(12) **EUROPEAN PATENT SPECIFICATION**

(45) Date of publication and mention of the grant of the patent:
**09.11.2016 Bulletin 2016/45**

(51) Int Cl.:
***G06K 9/00*** *(2006.01)*

(21) Application number: **12184877.4**

(22) Date of filing: **18.09.2012**

(54) **Facial direction detecting apparatus**

Gesichtsrichtungserkennungsvorrichtung

Appareil de détection de la direction du visage

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2011 JP 2011208336**

(43) Date of publication of application:
**27.03.2013 Bulletin 2013/13**

(73) Proprietor: **Honda Motor Co., Ltd.**
**Tokyo 107-8556 (JP)**

(72) Inventors:
• **Takahashi Akio**
**Saitama, 351-0193 (JP)**
• **Ueda, Shinsuke**
**Saitama, 351-0193 (JP)**

(74) Representative: **Weickmann & Weickmann PartmbB**
**Postfach 860 820**
**81635 München (DE)**

(56) References cited:
**JP-A- 2008 209 969      US-A- 5 008 946**
**US-A1- 2008 137 959**

• **SHUNJI KATAHARA ET AL: "Motion Estimation of Driver's Head from Nostrils Detection", ACCV2002: THE 5TH ASIAN CONFERENCE ON COMPUTER VISION, 23 January 2002 (2002-01-23), pages 1-6, XP055060971, Melbourne, Australia**

**Description**

BACKGROUND OF THE INVENTION

Field of the Invention:

The present invention relates to a facial direction detecting apparatus for detecting the facial direction of a person (a passenger, a driver, or the like in a vehicle). Description of the Related Art:

In US Patent Application Publication No. 2010/0014759 (hereinafter referred to as "US 2010/0014759 A1 "), a technique is disclosed in which, in order to provide an apparatus for detecting with good precision the eyes of a subject from a facial image even in the case that the subject has applied makeup or the like to the face, the edges of specified regions in the facial image are detected, and based on the detected edges, a condition of the eyes can be determined (see Abstract and paragraph [0005]). According to US 2010/0014759 A1 , it is borne in mind that the determined condition of the eyes may be used for measuring a line of sight direction and for estimating an arousal level (degree of alertness) of the subject (see paragraph [0002]).

As noted above, in US 2010/0014759 A1, although it is contemplated to detect the eyes with good precision for the purpose of measuring a line of sight direction or for estimating an arousal level, there is still room for improvement in relation to detection accuracy and computational load.

US 5,008,946 discloses a system which permits an automobile driver to control electrical devices installed on an automobile by moving his or her pupils and mouth intentionally. The system includes a TV camera, a light, a first microprocessor which controls the electrical devices according to the changes in the shape of the driver's mouth, a second microprocessor for performing various arithmetic operations, and memories. Reference values have been previously assigned to various elements of the driver's face and stored in one of the memories. The second microprocessor normalizes the distances between the elements of the face with the distance between the pupils of the eyes and compares the normalized distances with the reference values to calculate the degrees of similarity of the elements.

US 2008/0137959 A1 discloses an eye detecting device which includes an image generating device for generating a face image, a nostril detecting portion for detecting a nostril in the face image, an eye searching area setting portion for setting an eye searching area in the face image based on a position of the nostril detected by the nostril detecting portion, and an eye searching portion for searching an eye within the eye searching area set by the eye searching area setting portion.

Shunji Katahara and Masayoshi Aoki "Motion Estimation of Driver's Head from Nostrils Detection", in ACCV2002: The 5th Asian Conference on Computer Vision, 23-25 January 2002, Melbourne Australia, disclose a method of estimating driver's head movement by tracking a pair of nostrils. Nostrils clearly appear as a pair of dark areas in a a facial image. Shape of nostrils have little influence of deformation compared to eyes. A concentric circular mask or density difference mask is used to detect difference of image density. A nostril position is represented by a center of gravity of extracted nostril region, and a moving average is applied to a sequence of the detected nostrils positions. Reference positions of nostrils are decided through a procedure that an interval of moving average is fixed into a standard cycle of model driver's head motion. The driver's head movement is estimated from a difference between detected nostrils position and reference nostrils position. Cycle of driver's head movement is available for a measure of monitoring driving condition.

The present invention has been developed taking into consideration the aforementioned problems, and has the object of providing a novel facial direction detecting apparatus, which can lead to at least one of an improvement in detection accuracy and a reduction in computational load.

The invention provides a facial direction detecting apparatus according to claim 1.

According to the present invention, the facial direction of a passenger is detected using the nostrils. For this reason, for example, by using the present invention in addition to the conventional technique of detecting the eyes, the precision in detection of the facial direction or the line of sight direction can be enhanced. Further, the facial direction can be detected even in cases where the passenger is wearing glasses or sunglasses. Accordingly, compared to the case of detecting the line of sight direction, for which detection may be impossible if the passenger is wearing glasses or sunglasses, the range of applications can be widened. Further, in the case that the facial direction is changed toward the left or right, compared to using the eyes, the eyebrows, the mouth, and the mustache, because the positions of the nostrils are separated relatively from the axis of rotation of the head, accompanying changes in the facial direction, the amount of movement of the nostrils becomes relatively large. For this reason, by using the nostrils, changes in the facial direction toward the left or right can be detected with high precision.

Furthermore, according to the present invention, facial ends are detected from the image of the person, and based on the facial ends, the axis of rotation of the head is calculated. Further, multiple characteristic portions are extracted from the personal image, and a characteristic portion for which the amount of movement thereof is greatest from among all of the extracted characteristic portions is extracted as the nostrils. In addition, the facial direction toward the left or right is detected using the calculated axis of rotation of the head and the extracted nostrils. Consequently, a novel detection method in relation to a left or right facial direction can be provided. Additionally, in accordance with the detection method of the multiple characteristic portions and the computational method for calculating the amount of movement of each of the characteristic portions, the processing burden can be made lighter.

The characteristic portion extracting unit may further comprise a low luminance area extracting unit for extracting, as the multiple characteristic portions from the personal image, multiple low luminance areas having a predetermined size and for which a luminance thereof is lower than a predetermined luminance, wherein the nostril extracting unit extracts, as the nostril, a low luminance area for which an amount of movement thereof is greatest from among the multiple low luminance areas extracted by the low luminance area extracting unit.

Low luminance areas, which possess a predetermined size in the personal image, are limited due to the predetermined size thereof. For example, in accordance with the race, sex, or ethnicity of the person, the pupils, the eyebrows, mustache, etc., have low luminance as a result of the intrinsic color thereof. Further, the nostrils and the mouth (interior of the mouth), etc., are low in luminance owing to the shadows formed thereby. Low luminance areas formed by such extracted objects can be regarded as limited in number, and enable binary processing to be performed corresponding to the luminance thereof. Owing thereto, it is possible to carry out processing that is comparatively simple yet high in precision.

The low luminance area extracting unit may treat an inner side of the facial ends detected by the facial end detecting unit as a nostril candidate extraction area, and may extract multiple low luminance areas having a predetermined size only from within the nostril candidate extraction area.

Consequently, because the nostril extraction areas can be limited, the computational load is lessened and the processing speed can be enhanced.

The facial direction detecting apparatus may further comprise a plurality of vehicle-mounted devices mounted in a vehicle and which are capable of being operated by a passenger of the vehicle, and a vehicle-mounted device identifying unit for identifying any one of the vehicle-mounted devices from among the multiple vehicle-mounted devices based on the facial direction detected by the facial direction detecting unit, wherein the facial end calculating unit treats the facial image of the passenger, which was captured by the image capturing unit, as the personal image, and detects the facial ends of the passenger, and wherein the vehicle-mounted device identifying unit identifies the vehicle-mounted device based on the facial direction detected by the facial direction detecting unit.

With a vehicle in which a passenger turns his or her face in a direction toward a vehicle-mounted device that the passenger intends to operate so as to identify the vehicle-mounted device as an operation target device, cases are frequent in which the angle of rotation of the head for operating the vehicle-mounted device is relatively large. Owing thereto, because the detection accuracy of the nostrils tends to be increased, through application of the present invention, it becomes possible for the detection accuracy of the facial direction to be enhanced.

A facial direction detecting apparatus according to the present invention comprises an image capturing unit that captures an image of a head of a person, an edge detector that detects left and right edges of the head from the image of the head (hereinafter referred to as a "head image"), a rotational axis identifier that identifies an axis of rotation of the head in the head image using the left and right edges, a characteristic area extractor that extracts multiple characteristic areas, which are areas in the head image for which a luminance thereof is lower than a threshold which is lower than a predetermined luminance or for which the luminance thereof is higher than a threshold which is higher than the predetermined luminance, a displacement amount calculator that calculates, in relation to each of the respective multiple characteristic areas, a displacement amount accompanying rotation of the head, a maximum displacement area identifier that identifies an area for which the displacement amount thereof is greatest (hereinafter referred to as a "maximum displacement area") from among the multiple characteristic areas, a central line identifier that identifies, based on the maximum displacement area, a central line in a vertical direction of the head when the head is viewed from a frontal direction thereof, and a facial direction calculator that calculates as a facial direction an orientation of the head, based on a relative positional relationship between the axis of rotation and the central line in the head image.

According to the present invention, a novel detection method is provided for detecting a facial direction. Further, with the present invention, since so-called "pattern matching" techniques are not utilized, the possibility exists for the computational load to be made lighter.

The above and other objects, features, and advantages of the present invention will become more apparent from the following description when taken in conjunction with the accompanying drawings in which a preferred embodiment of the present invention is shown by way of illustrative example.

BRIEF DESCRIPTION OF THE DRAWINGS

FIG. 1 is an overall block diagram of a vehicle incorporating therein a vehicle-mounted device operating apparatus as a facial direction detecting apparatus according to an embodiment of the present invention;

FIG. 2 is a view of a front windshield area of the vehicle;

FIG. 3 is a front elevational view of a steering wheel of the vehicle;

FIG. 4 is a perspective view of a door mirror of the vehicle;

FIG. 5 is a view showing a front windshield area, which is divided into five areas;

FIG. 6A is a view showing a first example of operations performed by the driver for changing the volume of an audio device;

FIG. 6B is a view showing a second example of operations performed by the driver for changing the volume of the audio device;

FIG. 6C is a view showing a third example of operations performed by the driver for changing the volume of the audio device;

FIG. 7A is a view showing a head-up display (HUD) and a first example of operations performed by the driver for confirming vehicle speed and mileage;

FIG. 7B is a view showing the displayed HUD and a second example of operations performed by the driver for confirming vehicle speed and mileage;

FIG. 7C is a view showing the displayed HUD and a third example of operations performed by the driver for confirming vehicle speed and mileage;

FIG. 8A is a view showing a first example of operations performed by the driver for opening and closing a front passenger seat-side window;

FIG. 8B is a view showing a second example of operations performed by the driver for opening and closing the front passenger seat-side window;

FIG. 8C is a view showing a third example of operations performed by the driver for opening and closing the front passenger seat-side window;

FIG. 9 is a diagram showing a list of processes of selecting and operating vehicle-mounted devices;

FIG. 10 is a diagram showing a list of buttons allocated to vehicle-mounted devices;

FIG. 11 is a flowchart of a sequence for selecting and operating a vehicle-mounted device;

FIG. 12 is an explanatory diagram describing in outline form a cylinder method;

FIG. 13 is a flowchart of a sequence of operations of an electronic control unit (hereinafter referred to as an "ECU") for detecting the viewing direction of a driver;

FIG. 14A is a view showing conditions by which a facial image is obtained;

FIG. 14B is a view showing conditions by which characteristic points are extracted;

FIG. 14C is a view showing conditions by which facial end lines are detected, and by which an axis of rotation of the face (head), an angle formed between the axis of rotation and an optical axis of a passenger camera, and a radius of the face (head) are calculated;

FIG. 14D is a view showing conditions by which nostril candidate extraction areas are narrowed down;

FIG. 14E is a view showing conditions by which nostril candidates are extracted;

FIG. 14F is a view showing conditions by which detections of nostrils is performed, and by which a vertical center line when the face is viewed from the front is calculated;

FIG. 15 is a plan view for explaining a method of detecting a facial direction θ;

FIG. 16 is an explanatory drawing for describing a movement amount and changes in shape of the eyes and nostrils at a time when the face is rotated;

FIG. 17 is a flowchart of an operation sequence of the ECU for selecting an operation target device;

FIG. 18 is a flowchart of an operation sequence for selecting an operation target device when the viewing direction of the driver is a central direction;

FIG. 19 is a flowchart of an operation sequence for selecting an operation target device when the viewing direction of the driver is a forward direction;

FIG. 20 is a flowchart of an operation sequence for selecting an operation target device when the viewing direction of the driver is a rightward direction;

FIG. 21 is a flowchart of an operation sequence for selecting an operation target device when the viewing direction of the driver is a leftward direction;

FIG. 22 is a flowchart of an operation sequence of the ECU for operating an operation target device;

FIG. 23 is a flowchart of an operation sequence for operating a navigation device;

FIG. 24 is a flowchart of an operation sequence for operating an audio device;

FIG. 25 is a flowchart of an operation sequence for operating an air conditioner;

FIG. 26 is a flowchart of an operation sequence for operating the HUD;

FIG. 27 is a flowchart of an operation sequence for operating a hazard lamp;

FIG. 28 is a flowchart of an operation sequence for operating a driver seat;

FIG. 29 is a flowchart of an operation sequence for operating a rear light;

FIG. 30 is a flowchart of an operation sequence for operating a driver seat-side window;

FIG. 31 is a flowchart of an operation sequence for operating a front passenger seat-side window;

FIG. 32 is a view showing a front windshield area, which is divided into three regions, according to a first modification of FIG. 5; and

FIG. 33 is a view showing a front windshield area, which is divided into eight regions, according to a second modification of FIG. 5.

## DETAILED DESCRIPTION OF THE PREFERRED EMBODIMENTS

1. Description of Overall Arrangement:

[1-1. Overall Arrangement]

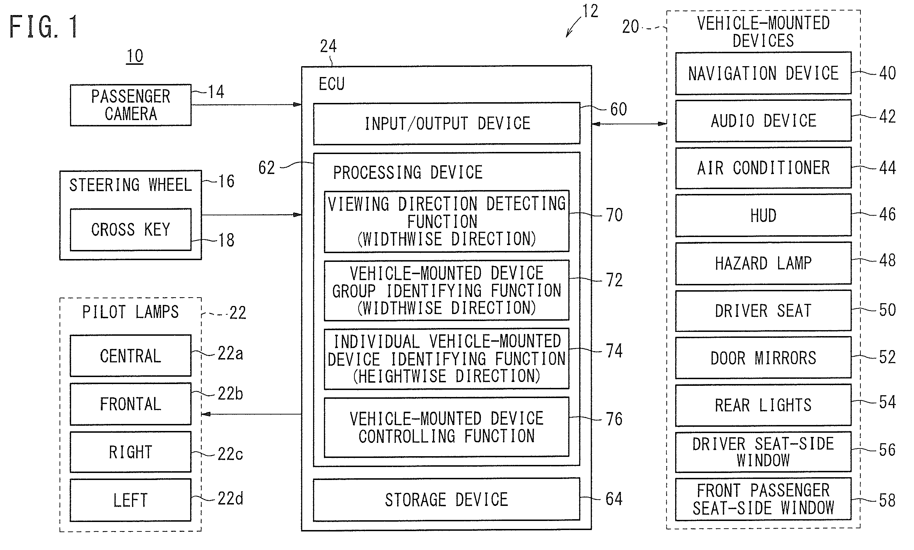

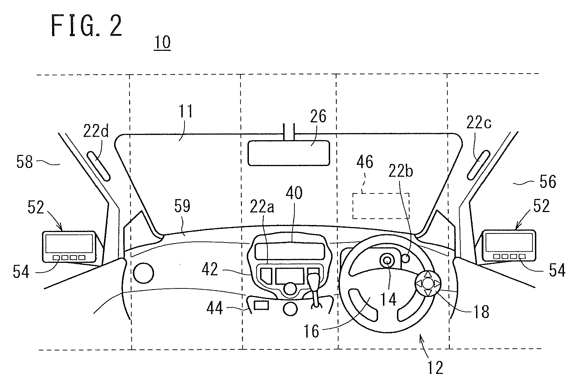

FIG. 1 is an overall block diagram of a vehicle 10 incorporating therein a vehicle-mounted device operating apparatus 12 (hereinafter also referred to as an "operating apparatus 12") as a facial direction detecting apparatus according to an embodiment of the present invention. FIG. 2 is a view of a front windshield 11 area of the vehicle 10. As shown in FIGS. 1 and 2, the operating apparatus 12 includes a passenger camera 14, a cross key 18 mounted on a steering wheel 16, a plurality of pilot lamps 22a through 22d (hereinafter collectively referred to as "pilot lamps 22"), and an electronic control unit 24 (hereinafter referred to as an "ECU 24"). As shown in FIG. 2, the vehicle 10 according to the present embodiment is a right steering wheel vehicle. However, a left steering wheel vehicle may also incorporate the same details as those of the present embodiment.

[1-2. Passenger Camera 14]

As shown in FIG. 2, the passenger camera 14 (image capturing unit) is mounted on a steering column (not shown) in front of the driver, and captures an image of the face (head) of the driver (hereinafter referred to as a "facial image", a "personal image", or a "head image"). The location of the passenger camera 14 is not limited to the above position, but may be installed at any location on an instrument panel 59, for example. The passenger camera 14 is not limited to a camera for capturing an image from a single direction, but may be a camera for capturing images from a plurality of directions (a so-called "stereo camera"). Furthermore, the passenger camera 14 may be either a color camera or a monochrome camera.

[1-3. Cross Key 18]

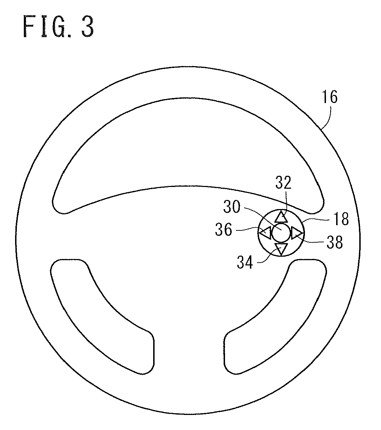

The driver can identify a vehicle-mounted device 20 to be operated (hereinafter referred to as an "operation target device") and enter operational inputs for the identified vehicle-mounted device 20 using the cross-key 18. As shown in FIG. 3, the cross key 18 has a central button 30, an upper button 32, a lower button 34, a left button 36, and a right button 38. In FIG. 2, the cross key 18 is shown in an enlarged scale. A process of operating the cross key 18 will be described later.

[1-4. Plural Vehicle-Mounted Devices 20]

According to the present embodiment, the vehicle-mounted devices 20 (FIG. 1) include a navigation device 40, an audio device 42, an air conditioner 44, a head-up display 46 (hereinafter referred to as a "HUD 46"), a hazard lamp 48, a driver seat 50, door mirrors 52, rear lights 54, a driver seat-side window 56, and a front passenger seat-side window 58.

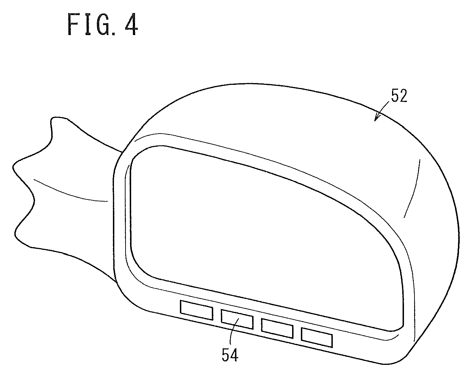

As shown in FIG. 4, the rear lights 54 illuminate side rear regions of the vehicle 10 with light-emitting diodes (LEDs) below the door mirrors 52.

[1-5. Pilot Lamps 22a through 22d]

According to the present embodiment, four pilot lamps 22a through 22d are provided. More specifically, as shown in FIG. 2, the pilot lamps 22a through 22d include a central pilot lamp 22a, a front pilot lamp 22b, a right pilot lamp 22c, and a left pilot lamp 22d. The pilot lamps 22a through 22d indicate which one of a plurality of vehicle-mounted device groups A through D (hereinafter also referred to as "groups A through D") is selected.

[1-6. ECU 24]

The ECU 24 controls the vehicle-mounted device operating apparatus 12 (in particular, each of the vehicle-mounted devices 20 according to the present embodiment). As shown in FIG. 1, the ECU 24 has an input/output device 60, a processing device 62, and a storage device 64. The processing device 62 includes a viewing direction detecting function 70, a vehicle-mounted device group identifying function 72, an individual vehicle-mounted device identifying function 74, and a vehicle-mounted device controlling function 76.

According to the present embodiment, it is possible to control each of the vehicle-mounted devices 20 individually by using the functions 70, 72, 74 and 76. More specifically, the driver can control a vehicle-mounted device 20 (hereinafter referred to as an "operation target device") by directing the driver's line of sight or the driver's facial direction along a vehicular widthwise direction where the operation target device is present, and then operating the cross key 18. As described later, the driver can also identify and control an operation target device according to various other processes.

The viewing direction detecting function 70 is a function for detecting the viewing direction of the driver based on the facial direction of the driver (person, passenger). In addition thereto, the direction of the line of sight (eyeball direction) may be used. The vehicle-mounted device group identifying function 72 (vehicle-mounted device identifying unit) is a function to identify a vehicle-mounted device group (groups A through D) that is present in the viewing direction detected by the viewing direction detecting function 70. The individual vehicle-mounted device identifying function 74 is a function to identify an operation target device, depending on an operation made by the driver, from among a plurality of vehicle-mounted devices 20 included in the vehicle-mounted device group that is identified by the vehicle-mounted device group identifying function 72. The vehicle-mounted device controlling function 76 is a function to control the operation target device identified by the individual vehicle-mounted device identifying function 74, depending on an operation input entered by the driver.

2. Outline of Control Process According to the Present Embodiment:

According to the present embodiment, as described above, the driver directs the driver's face along a vehicular widthwise direction where an operation target device is present, and then operates the cross key 18 to thereby control the operation target device.

To perform the above control process, according to the present embodiment, a facial direction is detected based on a facial image of the driver, which is captured by the passenger camera 14. A viewing direction along the vehicular widthwise direction is identified based on the detected facial direction. Thereafter, a heightwise direction (vertical direction) is identified based on an operation made on the cross key 18. In this manner, an operation target device is identified.

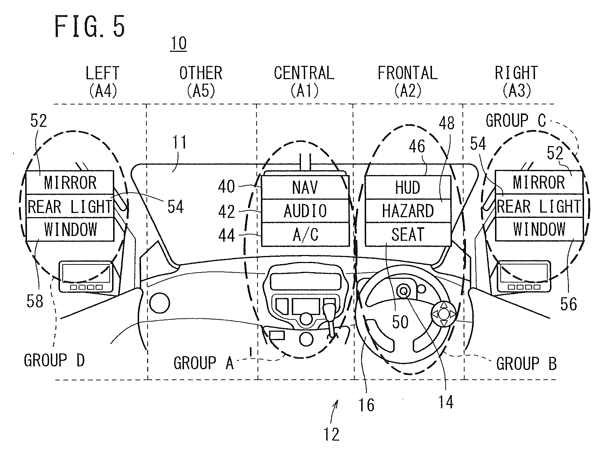

According to the present embodiment, five viewing directions are established along the widthwise direction, as shown in FIG. 5. More specifically, the front windshield 11 area is divided into five areas A1 through A5. The five areas A1 through A5 include an area A1 in a central direction, an area A2 in a frontal direction, an area A3 in a rightward direction, an area A4 in a leftward direction, and an area A5 in another direction. The vehicle-mounted devices 20 are assigned to the respective directions (groups A through D).

The navigation device 40, the audio device 42, and the air conditioner 44 (group A) are assigned to the area A1 in the central direction. In FIG. 5 and the other figures, "NAV" refers to a navigation device, "AUDIO" refers to an audio device, and "A/C" refers to an air conditioner.

The HUD 46, the hazard lamp 48, and the seat 50 (group B) are assigned to the area A2 in the frontal direction. In FIG. 5 and the other figures, "HAZARD" refers to a hazard lamp. One of the door mirrors 52, one of the rear lights 54, and the driver seat-side window 56 (group C) are assigned to the area A3 in the rightward direction. The other door mirror 52, the other rear light 54, and the front passenger seat-side window 58 (group D) are assigned to the area A4 in the leftward direction. No vehicle-mounted device 20 is assigned to the area A5 in the other direction. According to the present embodiment, the left and right door mirrors 52 are simultaneously unfolded and folded, and the left and right rear lights 54 are simultaneously operated.

The ECU 24 (viewing direction detecting function 70) detects a facial direction based on the facial image from the passenger camera 14, and judges a viewing direction of the driver. Then, the ECU 24 (vehicle-mounted device group identifying function 72) identifies a vehicle-mounted device group (groups A through D) based on the judged viewing direction. Then, the ECU 24 identifies an operation target device depending on a pressed button (any one of the buttons 30, 32, 34, 36, or 38) of the cross key 18. Thereafter, the ECU 24 operates the operation target device depending on how the cross key 18 is operated. 3. Processes of Selecting Operation Target Devices and Operational Examples in the Present Embodiment:

[3-1. Changing the Volume of the Audio Device 42]

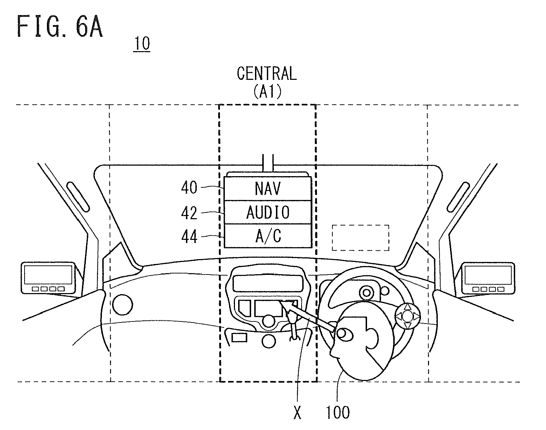

FIGS. 6A through 6C show first through third examples of operations performed by a driver 100 for changing the volume of the audio device 42. As shown in FIG. 6A, the driver 100 turns the driver's face to the area A1 (central direction) where the audio device 42 is present, from among all of the five areas A1 through A5. The ECU 24 then identifies the vehicle-mounted device group (group A) using a viewing direction judging technology to be described later. The arrow X in FIG. 6A (and the other figures) represents the viewing direction of the driver 100. The viewing direction X basically represents the facial direction, which as necessary, can be corrected by the viewing direction (eyeball direction), as will be described in detail later.

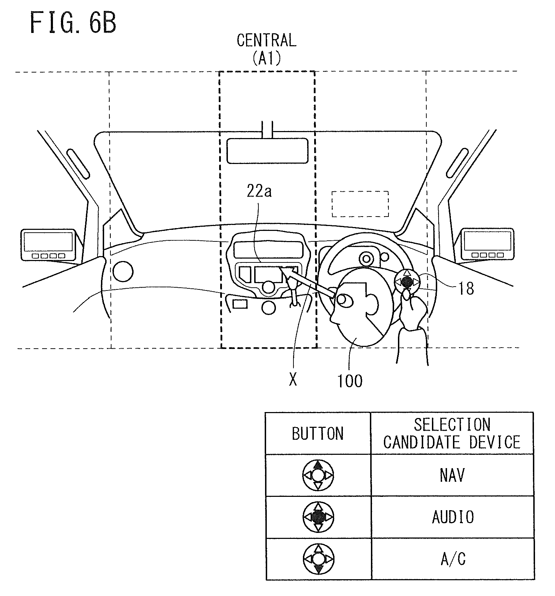

In FIG. 6B, the driver 100 presses the cross key 18 at a position based on the positional relationship of the vehicle-mounted devices (the navigation device 40, the audio device 42, and the air conditioner 44, which are arranged in this order from above), thereby determining an operation target device from among the vehicle-mounted devices. More specifically, since the position in the cross key 18 that corresponds to the audio device 42 is represented by the central button 30, the driver 100 presses the central button 30. Group A is selected and the central pilot lamp 22a is energized.

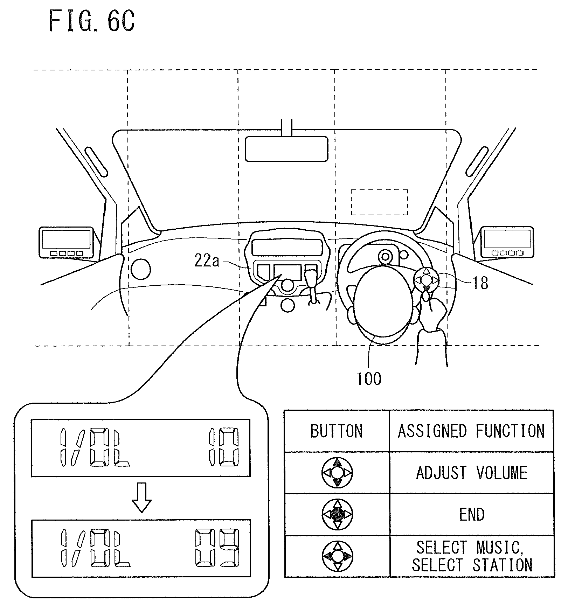

In FIG. 6C, the driver 100 operates the cross key 18 to adjust the volume of the audio device 42. More specifically, each time that the driver 100 presses the upper button 32, the volume increments by one level, and each time that the driver 100 presses the lower button 34, the volume decrements by one level. At this time, the driver 100 does not need to see the target area (area A1 in the central direction corresponding to group A) and the vehicle-mounted device 20 (audio device 42). Rather, the driver can operate the operation target device (audio device 42) while looking in the forward direction. To finish operating the operation target device, the driver 100 presses the central button 30.

[3-2. Displaying the HUD 46 and Confirming Vehicle Speed and Mileage]

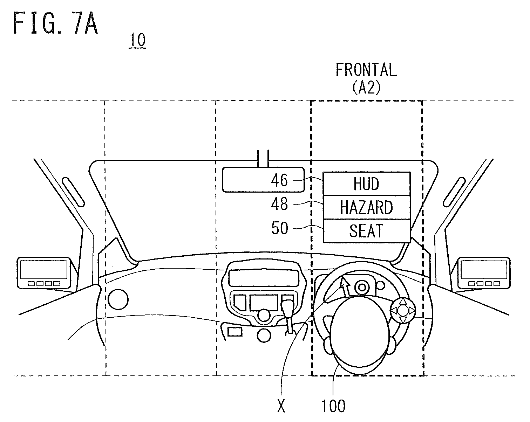

FIGS. 7A through 7C show first through third examples of operations performed by the driver 100 for confirming vehicle speed and mileage. As shown in FIG. 7A, the driver turns the driver's face toward the area A2 (frontal direction) where the HUD 46 is present, from among all of the five areas A1 through A5. The ECU 24 then identifies the vehicle-mounted device group (group B) using the viewing direction judging technology.

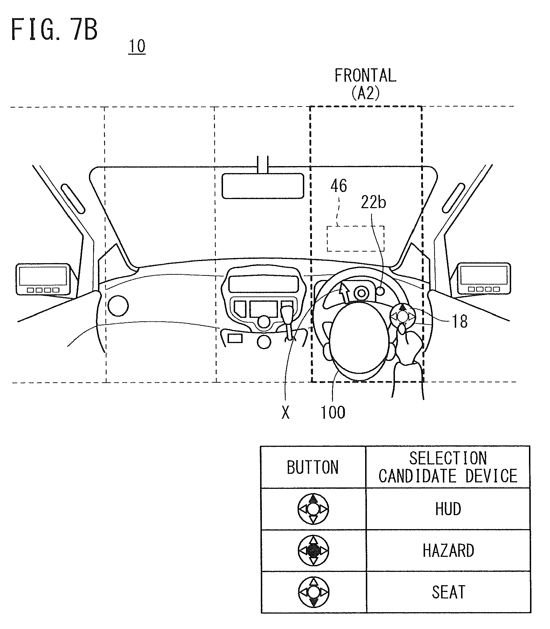

In FIG. 7B, the driver 100 presses the cross key 18 at a position based on the positional relationship of the vehicle-mounted devices (the HUD 46, the hazard lamp 48, and the seat 50, which are arranged in this order from above), thereby determining an operation target device from among the vehicle-mounted devices. More specifically, since the position on the cross key 18 that corresponds to the HUD 46 is represented by the upper button 32, the driver presses the upper button 32, whereupon the front pilot lamp 22b becomes energized.

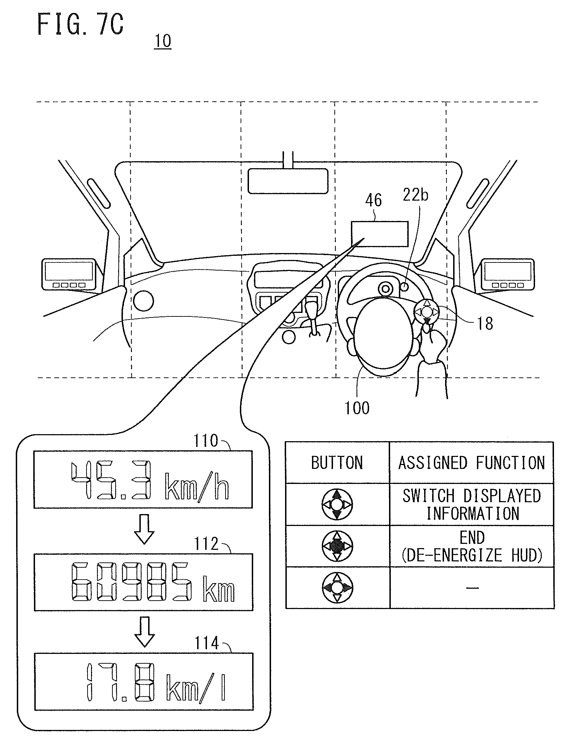

In FIG. 7C, the driver 100 operates the cross key 18 to switch between different displayed items on the HUD 46. More specifically, each time that the driver 100 presses the upper button 32, the HUD 46 switches from one displayed item to another displayed item according to a sequence from a vehicle speed 110, to a traveled distance 112, to a mileage 114, and back to the vehicle speed 110. Conversely, each time that the driver 100 presses the lower button 34, the HUD 46 switches from one displayed item to another displayed item according to a sequence from the vehicle speed 110, to the mileage 114, to the traveled distance 112, and back to the vehicle speed 110. The HUD 46 may display different items other than the vehicle speed 110, the traveled distance 112, and the mileage 114 (e.g., an amount of gasoline, a remaining battery level, and a distance that the vehicle can travel). At this time, the driver 100 does not need to view the target area (the area A2 in the frontal direction corresponding to group B) or the vehicle-mounted device 20 (HUD 46), but can operate the HUD 46 while looking in the forward direction. To finish operating the operation target device, the driver 100 presses the central button 30, thereby deenergizing the HUD 46.

[3-3. Opening and Closing of Front Passenger Seat-Side Window 58]

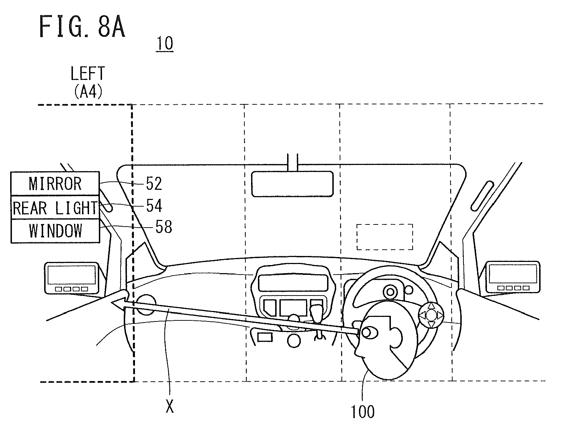

FIGS. 8A through 8C show first through third examples of operations performed by the driver 100 for opening and closing the front passenger seat-side window 58. As shown in FIG. 8A, the driver 100 turns the driver's face toward the area A4 (leftward direction) where the front passenger seat-side window 58 is present, from among all of the five areas A1 through A5. The ECU 24 then identifies the vehicle-mounted device group (group D) using the viewing direction judging technology.

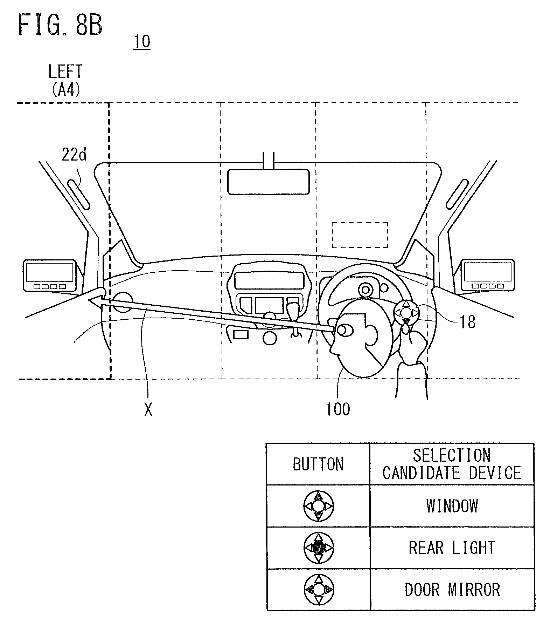

In FIG. 8B, the driver 100 presses the cross key 18 at a position based on the positional relationship of the vehicle-mounted devices (the door mirror 52, the rear light 54, and the front passenger seat-side window 58, which are arranged in this order from above), thereby determining an operation target device from among the vehicle-mounted devices. More specifically, since the position on the cross key 18 that corresponds to the front passenger seat-side window 58 is represented by the upper button 32 and the lower button 34, the driver 100 presses the upper button 32 or the lower button 34, whereupon the left pilot lamp 22d becomes energized.

The door mirror 52 and the rear light 54 are positionally related to each other in a vertical fashion. The front passenger seat-side window 58 may be positionally related in a vertical fashion either above or below the door mirror 52 and the rear light 54, depending on where a reference position is established for the front passenger seat-side window 58. In the present embodiment, an actuator (not shown) for the front passenger seat-side window 58 is used as a reference position. However, another reference position may be established for the front passenger seat-side window 58. Therefore, the corresponding relationship between the door mirror 52, the rear light 54, and the front passenger seat-side window 58 and the buttons on the cross key 18 may be changed. Usually, the door mirror 52 is unfolded and folded substantially horizontally, whereas the front passenger seat-side window 58 is opened and closed substantially vertically. In view of the directions in which the door mirror 52 and the front passenger seat-side window 58 are movable, the left button 36 and the right button 38 may be assigned to the door mirror 52, whereas the upper button 32 and the lower button 34 may be assigned to the front passenger seat-side window 58, to assist the driver 100 in operating them more intuitively.

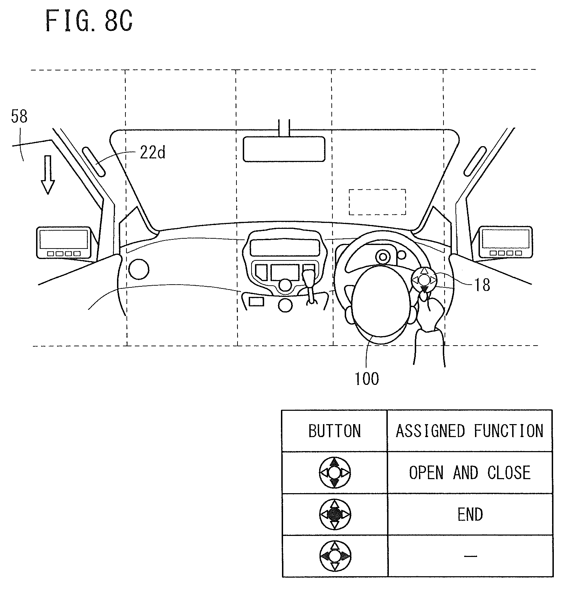

In FIG. 8C, the driver 100 operates the cross key 18 to open and close the front passenger seat-side window 58. More specifically, each time that the driver 100 presses the lower button 34, the front passenger seat-side window 58 is opened, and each time that the driver 100 presses the upper button 32, the front passenger seat-side window 58 is closed. At this time, the driver 100 does not need to see the vehicle-mounted device 20 (the front passenger seat-side window 58), but can operate the operation target device (the front passenger seat-side window 58) while looking in the forward direction. To finish operating the operation target device, the driver 100 presses the central button 30.

4. Summary of Processes for Selecting Vehicle-Mounted Devices 20 and Operational Examples:

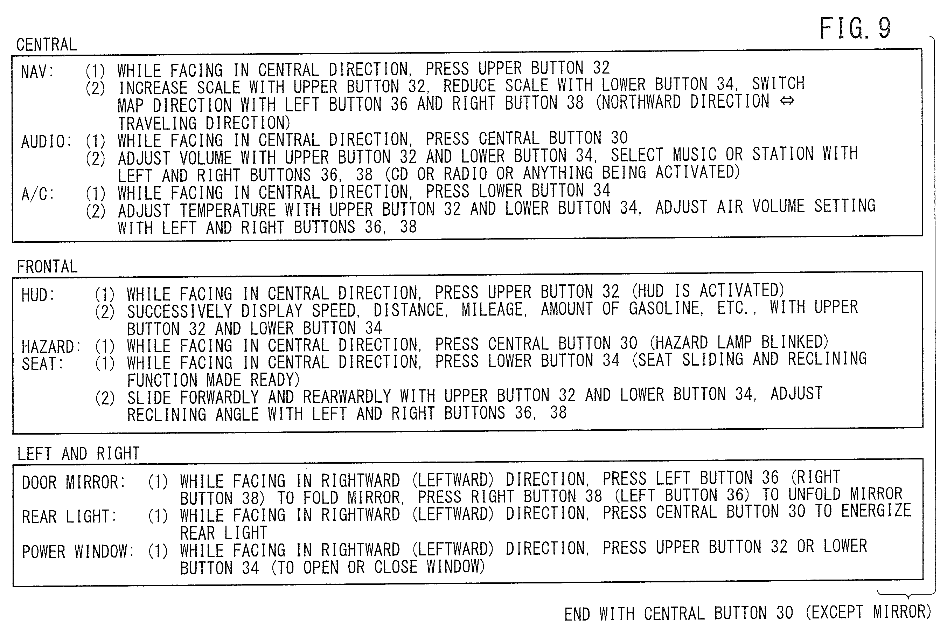

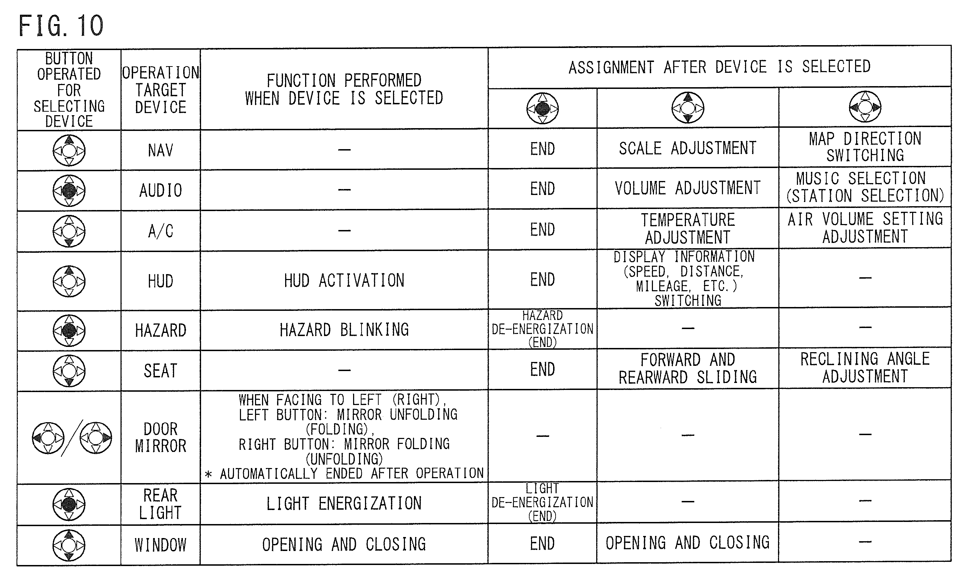

FIG. 9 is a diagram showing a list of processes for selecting and operating vehicle-mounted devices 20, and FIG. 10 is a diagram showing a list of buttons allocated to the vehicle-mounted devices. The driver 100 can easily operate the operation target devices by following the details in the lists shown in FIGS. 9 and 10.

5. Specific Flowcharts:

[5-1. Overall Flow]

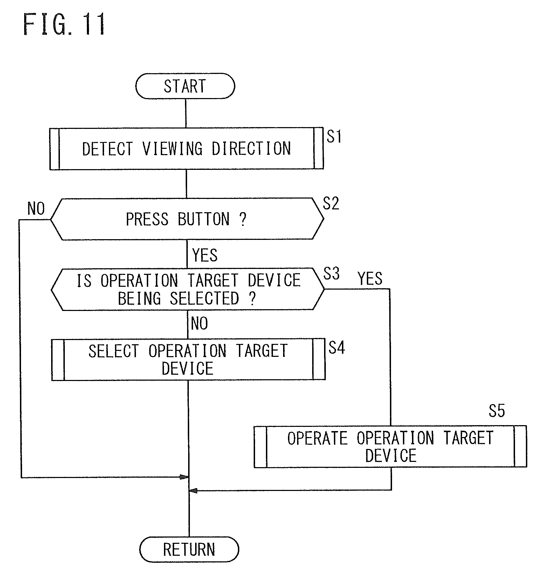

FIG. 11 is a flowchart of a sequence for selecting and operating a vehicle-mounted device 20. In step S1, the ECU 24 detects a viewing direction X of the driver 100 based on the facial image of the driver 100, which is acquired by the passenger camera 14. In step S2, the ECU 24 judges whether or not any one of the buttons of the cross key 18 has been pressed. If none of the buttons of the cross key 18 have been pressed (S2: NO), the present processing sequence is brought to an end. If one of the buttons of the cross key 18 has been pressed (S2: YES), then in step S3, the ECU 24 judges whether or not an operation target device is currently selected. If an operation target device is not currently selected (S3: NO), then in step S4, the ECU 24 selects an operation target device depending on an operation performed by the driver 100. If an operation target device is currently selected (S3: YES), then in step S5, the ECU 24 controls the operation target device depending on the operations performed by the driver 100.

[5-2. Detection of Viewing Direction X of Driver 100 (S1 in FIG. 11)]

(5-2-1. Summary)

Detection of the viewing direction X of the driver 100 is carried out by detecting the facial direction of the driver 100. Stated differently, the detected facial direction is used "as is" as the viewing direction X. As will be described later, in addition to detecting the facial direction, the direction of the line of sight of the driver 100 may be detected, and by using the same to correct the facial direction or as otherwise needed, the line of sight direction can be used in place of the facial direction as the viewing direction X.

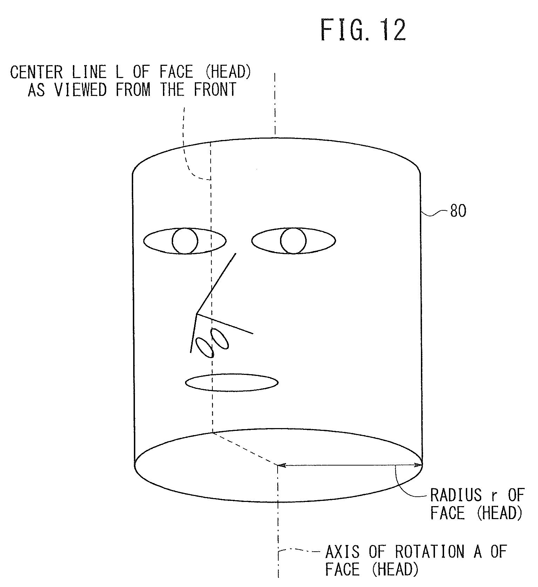

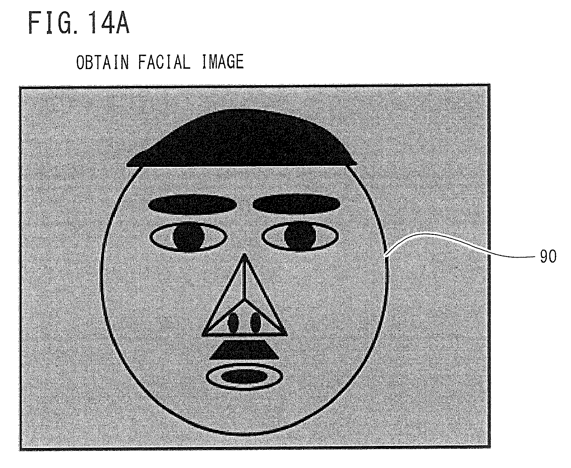

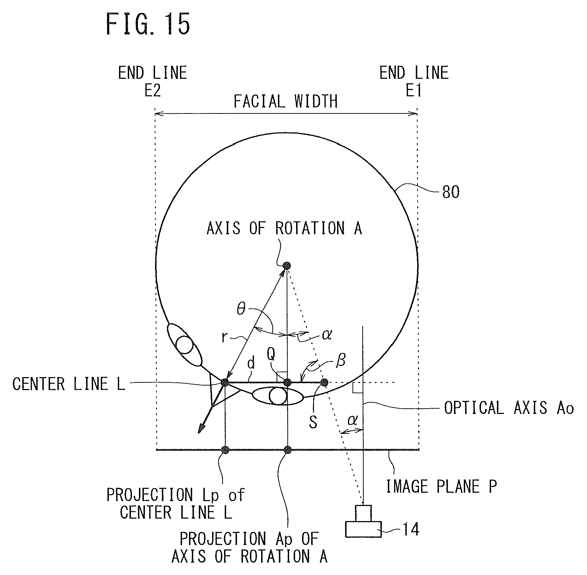

In the present embodiment, the ECU 24 (viewing direction detecting function 70) detects the facial direction $\theta$ (see FIG. 15) of the driver 100 using a cylinder method. FIG. 12 is an explanatory diagram for describing the cylinder method in outline form. Using the cylinder method, the face 80 (head) is made to resemble the shape of a circular column (cylinder) and the facial direction $\theta$ is detected. More specifically, with the cylinder method, based on a facial image 90 (see FIG. 14A) output from the passenger camera 14, an axis of rotation A of the face 80, a radius r of the face 80, and a central line L in the vertical direction of the face 80 as viewed from the front are determined, and based on such features, the facial direction $\theta$ is calculated (to be described in detail later). The facial direction $\theta$ as referred to herein is used in a broad sense covering not only the front of the head but also other parts thereof (e.g., the back of the head).

(5-2-2. Overall Process Flow)

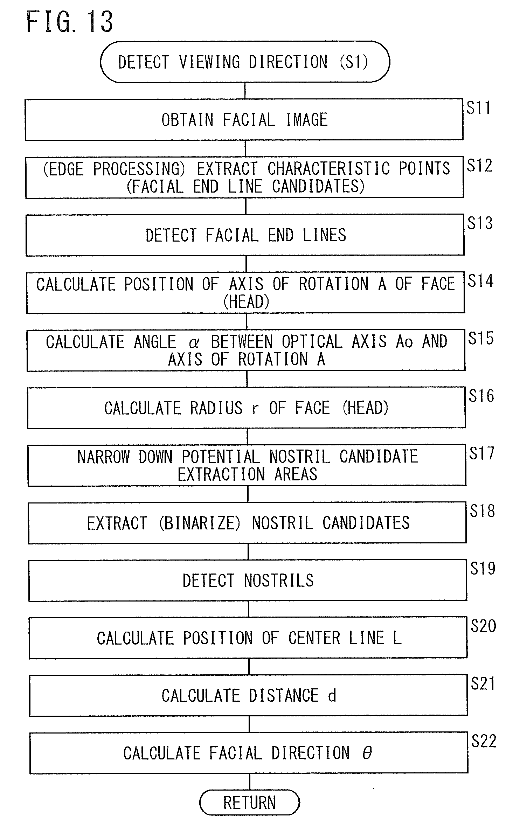

FIG. 13 is a flowchart of a sequence of operations of the ECU 24 for detecting a viewing direction X (details of step S1 in FIG. 11). FIGS. 14A through 14F are views showing conditions at times that the viewing direction X is detected. FIG. 15 is a plan view for explaining a method of detecting the facial direction θ.

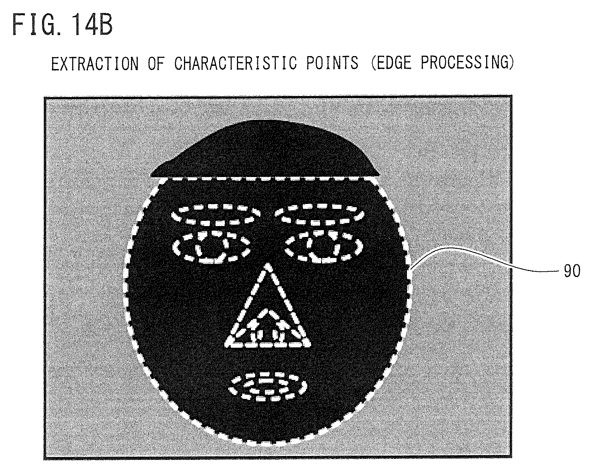

In step S11 of FIG. 13, the ECU 24 obtains the facial image 90 of the driver 100 from the passenger camera 14 (see FIG. 14A). In the present embodiment, it is assumed that the driver 100 is of Asian ethnicity, and the pupils, eyebrows, and beard, etc., of the driver 100 may be assumed to be black or brown in color. In step S12, the ECU 24 carries out edge processing to extract characteristic points within the facial image 90 (see FIG. 14B). The characteristic points become candidates for later-described facial end lines (edges) E1, E2 of the driver 100.

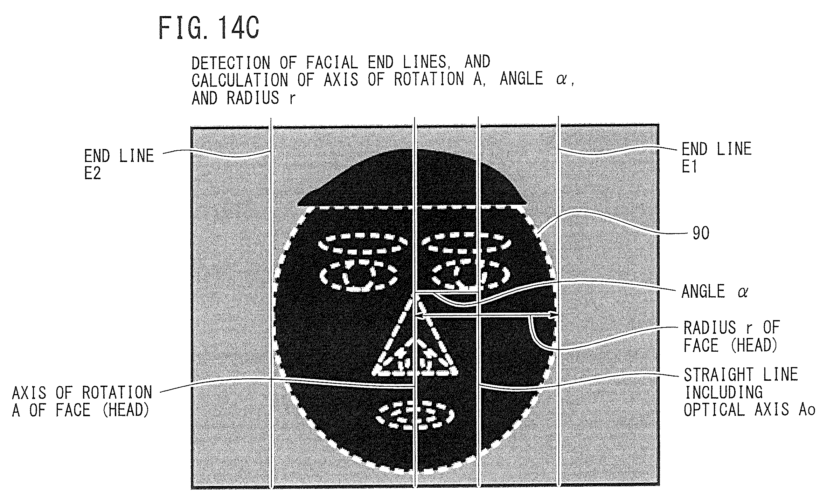

In step S13, the ECU 24 detects the facial end lines E1, E2 (see FIG. 14C). The facial end line E1 is an end line on the right side of the face 80 in the facial image 90, or stated otherwise, is a left side end line as viewed from the perspective of the driver 100. The facial end line E2 is an end line on the left side of the face 80 in the facial image 90, or stated otherwise, is a right side end line as viewed from the perspective of the driver 100. In the present embodiment, detection of the facial end lines E1, E2 define the facial end line E1 at a location on the rightmost side in the facial image 90, and define the facial end line E2 at a location on the leftmost side in the facial image 90. Further, as shown in FIG. 14C, the facial end lines E1, E2 in the present embodiment are not formed by single dots at the leftmost side or the rightmost side in the facial image 90, but are formed as straight vertical lines including therein the aforementioned single dots at leftmost side and rightmost sides. However, it is also possible for the facial ends E1, E2 to be defined by single dots or areas.

In step S14, the ECU 24 calculates a position of the axis of rotation A of the face 80 (see FIG. 14C) in the facial image 90 (image plane P, see FIG. 15). As shown in FIG. 12, the axis of rotation A is an axis that is set by assuming the shape of the face 80 as a cylinder. The axis of rotation A is defined by a straight line located in the center of the facial end lines E1, E2 in the facial image 90 (image plane P).

In step S15, the ECU 24 calculates an angle α formed between the axis of rotation A and the optical axis Ao of the passenger camera 14 (see FIG. 15). As shown in FIG. 14C, the angle α can be calculated from the distance between the axis of rotation A and a straight line in a vertical direction including the optical axis Ao. Therefore, the ECU 24 determines the angle α by calculating the distance between the aforementioned straight line and the axis of rotation A.

In step S16, the ECU 24 calculates a radius r of the face 80 (see FIG. 14C). As shown in FIG. 12, since the face 80 is assumed to be of a cylindrical shape, half of the distance between the end lines E1, E2 can be calculated to derive the radius r.

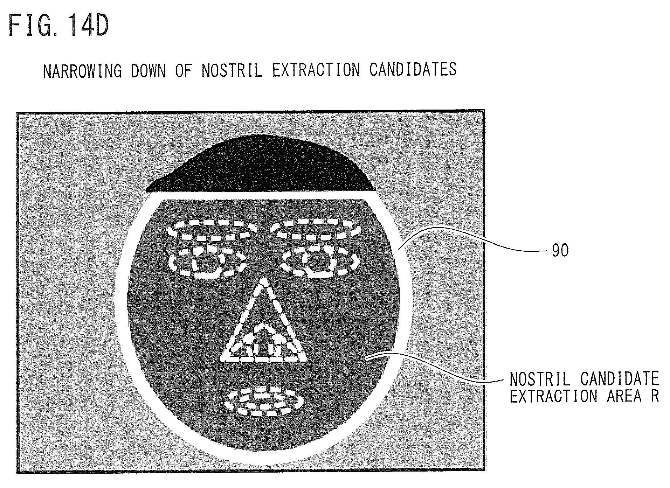

In step S17, the ECU 24 narrows down a nostril candidate extraction region R (see FIG. 14D). The nostril candidate extraction region R is an area for which there is a possibility for the nostrils 124 to be present therein, and is defined as a portion within the face 80 (head) exclusive of the hair.

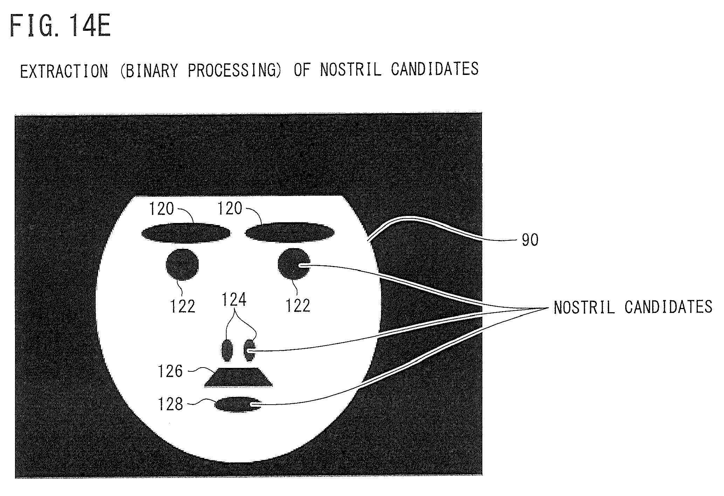

In step S18, the ECU 24 carries out binary processing on (i.e., binarizes) the nostril candidate extraction region R, and extracts locations therein that serve as candidates for the nostrils 124 (see FIG. 14E). More specifically, a luminance threshold is set in relation to values that are lower in luminance than locations corresponding to the skin within the face 80. Locations having luminosities (luminance) exceeding the aforementioned luminance threshold are set to white, whereas locations having luminosities (luminance) below the aforementioned luminance threshold are set to black. Further, the area outside of the nostril candidate extraction region R is set to black. In accordance therewith, after binary processing, in the facial image 90, the eyebrows 120, the eyes 122 (pupils), the nostrils 124, a mustache 126, and the mouth 128 become black areas (low luminance areas), and such black areas are extracted as candidates for the nostrils 124. Further, upon extracting the black areas, an area threshold (lower limit) is set for the sizes (areas) of the black areas, and black areas that are below the aforementioned lower limit can be excluded from being candidates for the nostrils 124. In a similar manner, another area threshold (upper limit) is set for the sizes (areas) of the black areas, and black areas that are above the aforementioned upper limit can be excluded from being candidates for the nostrils 124.

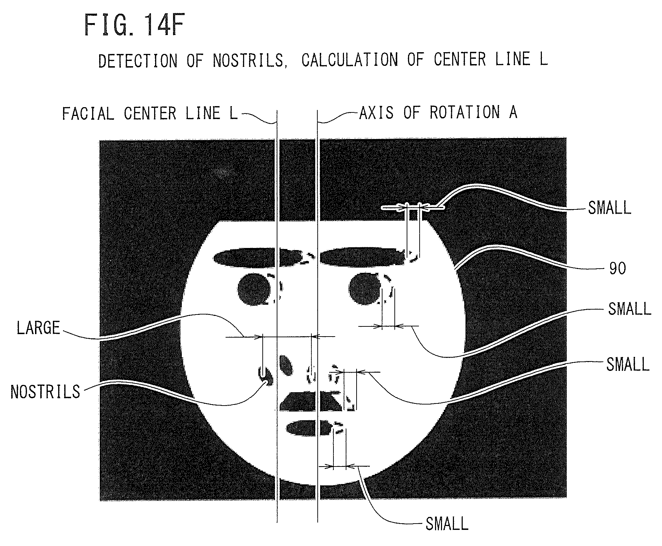

In step S19, the ECU 24 detects the nostrils 124 from among the black colored areas. In the present embodiment, detection of the nostrils 124 is performed in the following manner. Namely, the ECU 24 detects each of the black colored areas in relation to at least two frames of facial images 90 which are opened for a fixed time period. In addition, a movement amount in left and right directions of each of the black colored areas is measured (see FIG. 14F). The movement amounts can be defined as a difference in plural multiple images, and thus, substantially, the movement amounts are also indicative of a movement speed of each of the black colored areas. The movement amounts (movement speeds) and shape changes of the black colored areas are investigated.

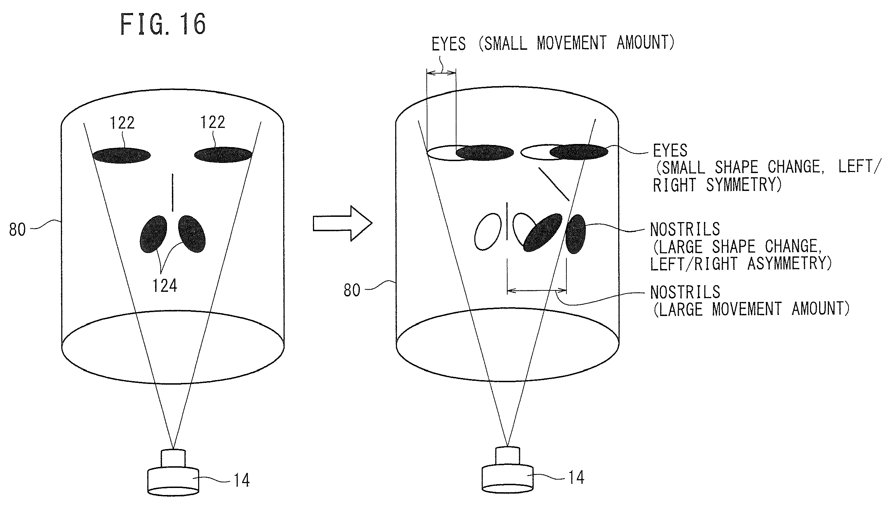

FIG. 16 is an explanatory drawing for describing a movement amount and change in shape of the eyes 122 and nostrils 124 at a time when the face 80 is rotated. As shown in FIG. 16, in the case that the facial direction θ is changed, the amount of movement of the nostrils 124 becomes greater than that of the eyes 122. This is due to the fact that, compared with the eyes 122, because the nostrils 124 are farther away from the axis of rotation A, even though the angle of rotation of the face 80 is the same, the arc traced by the trajectory of the nostrils 124 is longer than the arc traced by the trajectory of the eyes 122. Further, compared with the eyes 122, the nostrils 124 (nose) have a more pronounced three-dimensional shape. Therefore, in the case that the facial direction θ is changed, more so than the eyes 122, the change in shape of the nostrils 124 becomes greater (see FIG. 16). The same also holds true for the nostrils 124, even when compared with the eyebrows 120, the mustache 126, and the mouth 128 (see FIG. 14F).

Thus, in the present embodiment, in the facial image 90 after binarization thereof, the items therein for which the movement amount is greatest per unit time are identified as the nostrils 124. Further, based on the difference in the change in shape thereof as discussed above, the nostrils 124 can be identified using only the changes in shape (i.e., changes in area of the black colored regions), or using both the change in shape and the amount of movement.

Returning to FIG. 13, in step S20, the ECU 24 identifies the position of the center line L in the facial image 90 following binarization thereof (see FIG. 14F). As noted above, the center line L is defined by a central line in the vertical direction when the face 80 is viewed from the front (see also FIG. 12). Identification of the center line L is performed using the positions of the nostrils 124, which were detected in step S19. For example, in the facial image 90 (image plane P), a vertical line passing through the central position between the two nostrils 124 can be used as the center line L.

In step S21, the ECU 24 calculates the distance d. The distance d is defined by the distance connecting the point S and the center line L in FIG. 15. Since FIG. 15 is a plan view, the center line L is shown as a point in FIG. 15. Further, the point S is a point of intersection between a line segment connecting the passenger camera 14 and the axis of rotation A, and a ray or half-line drawn parallel to the image plane P from the center line L.

Calculation of the distance d is performed in the following manner. First, a point Q is placed at the intersection between the line segment LS and a straight line drawn vertically from the axis of rotation A with respect to the line segment LS. In addition, the length of the line section LS, i.e., the distance d, is determined by determining the lengths, respectively, of the line segment LQ and the line segment SQ.

The length of the line segment LQ can be calculated by measuring the distance (dot number) between a projection Lp of the center line L and a projection Ap of the axis of rotation A on the image plane P.

Concerning the length of the line segment SQ, if the length of the line segment LQ is known as described above, it becomes possible for the lengths of the sides AL and LQ of the right triangle ALQ to be known as well, and by the Pythagorean Theorem, the length of the side AQ can be determined. Further, in FIG. 15, the angle α between the optical axis Ao and the line segment connecting the passenger camera 14 and the axis of rotation A equals the angle QAS. Thus, the length of the line segment SQ, which is found from tan α = SQ/AQ, can be determined.

In addition, the lengths of the line segment LQ and the line segment SQ can be added to thereby calculate the distance d. As described later, even without using the distance d, the facial direction θ can still be calculated so long as the radius r and the length of the line segment LQ are known.

Returning to FIG. 13, in step S22, the ECU 24 calculates the facial direction θ (see FIG. 15). More specifically, assuming that β is defined by 90° - α, the equation (3), which is derived from the following equations (1) and (2) is used to calculate the facial direction θ.

$$\frac{r}{\sin(\beta)} = \frac{d}{\sin(\theta + \alpha)} \qquad \cdot \; \cdot \; \cdot \; (1)$$

$$\sin(\theta + \alpha) = \frac{d \sin(\beta)}{r} \qquad \cdot \; \cdot \; \cdot \; (2)$$

$$\theta = \sin^{-1}\left(\frac{d \sin(\beta)}{r}\right) - \alpha \; \cdot \; \cdot \; \cdot \; (3)$$

The foregoing equation (1) is derived from the sine theorem, whereas equation (2) is a simple variant of equation (1).

By adopting the above-described methodology, the facial direction θ can be determined.

[5-3. Selection of Operation Target Device (S4 in FIG. 11)]

(5-3-1. Summary)

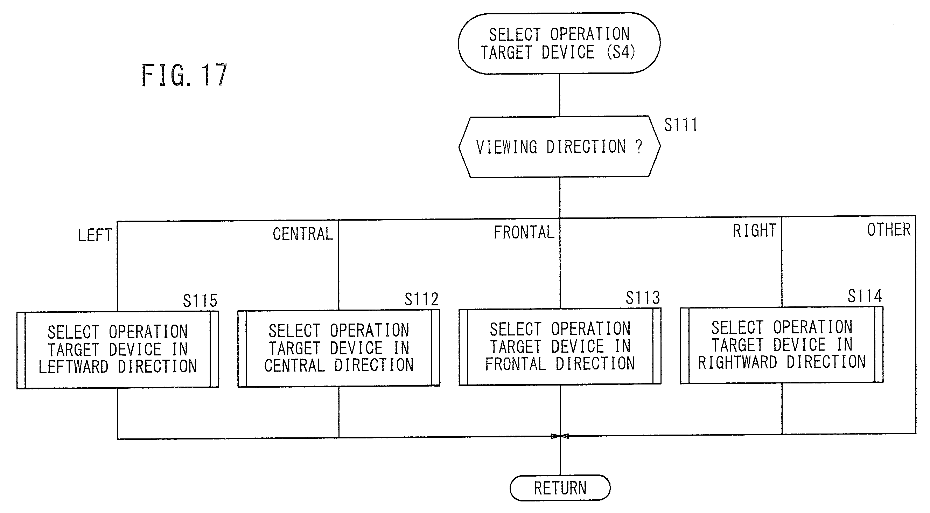

FIG. 17 is a flowchart of a sequence of operations performed by the ECU 24 for selecting an operation target device (details of S4 in FIG. 11). In step S111, the ECU 24 confirms whether the viewing direction X of the driver 100, which was identified in step S1 in FIG. 11, is a central, a frontal, a rightward, or a leftward direction, or another direction.

If the viewing direction X of the driver 100 is the central direction (area A1), then in step S112, the ECU 24 identifies the vehicle-mounted device group in the central direction, i.e., group A, which includes the navigation device 40, the audio device 42, and the air conditioner 44, and selects an operation target device from among group A.

If the viewing direction X of the driver 100 is the frontal direction (area A2), then in step S113, the ECU 24 identifies the vehicle-mounted device group in the frontal direction, i.e., group B, which includes the HUD 46, the hazard lamp 48, and the seat 50, and selects an operation target device from among group B.

If the viewing direction X of the driver 100 is the rightward direction (area A3), then in step S114, the ECU 24 identifies the vehicle-mounted device group in the rightward direction, i.e., group C, which includes the door mirror 52, the rear light 54, and the driver seat-side window 56, and selects an operation target device from among group C.

If the viewing direction X of the driver 100 is the leftward direction (area A4), then in step S115, the ECU 24 identifies the vehicle-mounted device group in the leftward direction, i.e., group D, which includes the door mirror 52, the rear light 54, and the front passenger seat-side window 58, and selects an operation target device from among group D.

If the viewing direction X of the driver 100 is another direction (area A5), the ECU 24 does not select any of the vehicle-mounted devices 20 and brings the present operation sequence to an end.

(5-3-2. Central Direction)

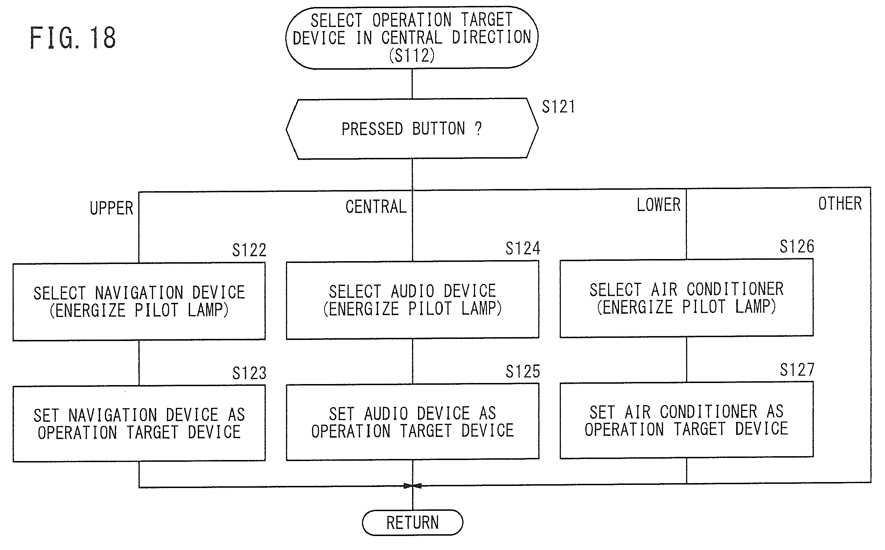

FIG. 18 is a flowchart of a sequence of operations for selecting an operation target device when the viewing direction X of the driver 100 is the central direction (area A1) (details of S112 in FIG. 17). In step S121, the ECU 24 judges whether the pressed button on the cross key 18 is the central button 30, the upper button 32, the lower button 34, or another button.

If the pressed button is the upper button 32, then in step S122, the ECU 24 selects the navigation device 40 and energizes the central pilot lamp 22a. In step S123, the ECU 24 sets the navigation device 40 as the operation target device.

If the pressed button is the central button 30, then in step S124, the ECU 24 selects the audio device 42 and energizes the central pilot lamp 22a. In step S125, the ECU 24 sets the audio device 42 as the operation target device.

If the pressed button is the lower button 34, then in step S126, the ECU 24 selects the air conditioner 44 and energizes the central pilot lamp 22a. In step S127, the ECU 24 sets the air conditioner 44 as the operation target device.

If the pressed button is none one of the upper button 32, the central button 30, or the lower button 34, the ECU 24 brings the operation sequence to an end.

(5-3-3. Frontal Direction)

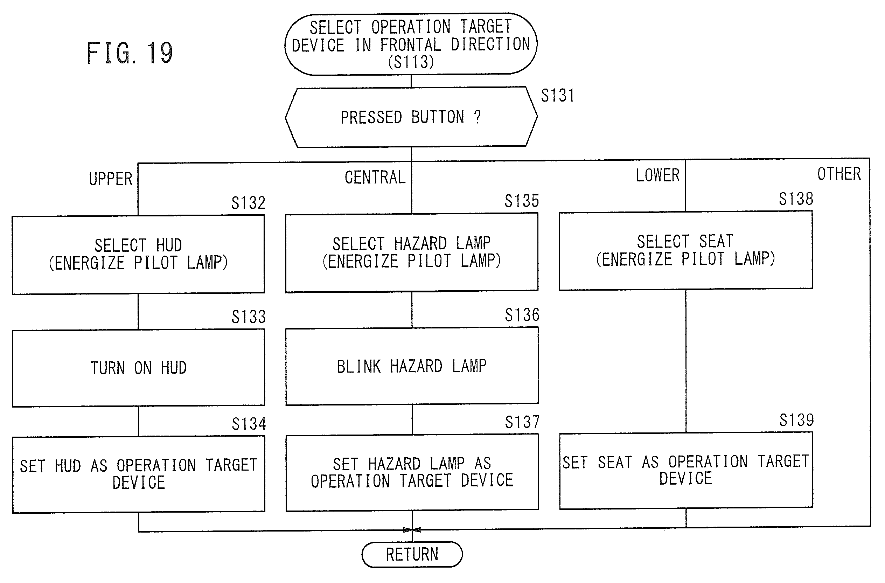

FIG. 19 is a flowchart of a sequence of operations for selecting an operation target device when the viewing direction X of the driver 100 is the frontal direction (area A2) (details of S113 in FIG. 17). In step S131, the ECU 24 judges whether the pressed button on the cross key 18 is the central button 30, the upper button 32, or the lower button 34.

If the pressed button is the upper button 32, then in step S132, the ECU 24 selects the HUD 46 and energizes the front pilot lamp 22b. In step S133, the ECU 24 turns on the HUD 46, whereupon the HUD 46 is displayed on the front windshield 11. In step S134, the ECU 24 sets the HUD 46 as the operation target device.

If the pressed button is the central button 30, then in step S135, the ECU 24 selects the hazard lamp 48 and energizes the front pilot lamp 22b. In step S136, the ECU 24 blinks the hazard lamp 48. In step S137, the ECU 24 sets the hazard lamp 48 as the operation target device.

If the pressed button is the lower button 34, then in step S138, the ECU 24 selects the seat 50 and energizes the front pilot lamp 22b. In step S139, the ECU 24 sets the seat 50 as the operation target device.

If the pressed button is none of the upper button 32, the central button 30, or the lower button 34, the ECU 24 brings the present operation sequence to an end.

(5-3-4. Rightward Direction)

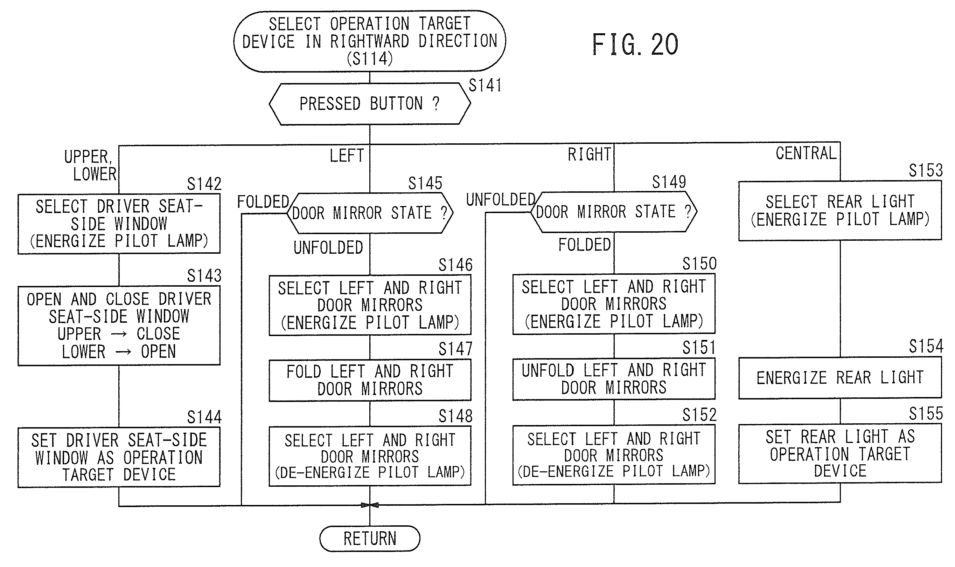

FIG. 20 is a flowchart of a sequence of operations for selecting an operation target device when the viewing direction X of the driver 100 is the rightward direction (area A3) (details of S114 in FIG. 17). In step S141, the ECU 24 judges whether the pressed button on the cross key 18 is the central button 30, the upper button 32, the lower button 34, the left button 36, or the right button 38.

If the pressed button is the upper button 32 or the lower button 34, then in step S142, the ECU 24 selects the driver seat-side window 56 and energizes the right pilot lamp 22c. In step S143, the ECU 24 opens or closes the driver seat-side window 56. More specifically, if the lower button 34 is pressed, the ECU 24 opens the driver seat-side window 56, and if the upper button 32 is pressed, the ECU 24 closes the driver seat-side window 56. In step S144, the ECU 24 sets the driver seat-side window 56 as the operation target device.

If the pressed button is the left button 36, then in step S145, the ECU 24 confirms the state (unfolded or folded) of the door mirror 52. If the door mirror 52 is in a folded state, the ECU 24 brings the present operation sequence to an end. If the door mirror 52 is in an unfolded state, then in step S146, the ECU 24 selects both the left and right door mirrors 52 and energizes the right pilot lamp 22c.

In step S147, the ECU 24 folds the left and right door mirrors 52. In step S148, the ECU 24 selects the left and right door mirrors 52 and deenergizes the right pilot lamp 22c.

If the pressed button is the right button 38, then in step S149, the ECU 24 confirms the state (unfolded or folded) of the door mirror 52. If the door mirror 52 is in an unfolded state, the ECU 24 brings the present operation sequence to an end. If the door mirror 52 is in a folded state, then in step S150, the ECU 24 selects both the left and right door mirrors 52 and energizes the right pilot lamp 22c.

In step S151, the ECU 24 unfolds the left and right door mirrors 52. In step S152, the ECU 24 selects the left and right door mirrors 52 and deenergizes the right pilot lamp 22c.

If the pressed button is the central button 30, then in step S153, the ECU 24 selects the rear light 54 and energizes the right pilot lamp 22c. In step S154, the ECU 24 energizes the rear light 54. In step S155, the ECU 24 sets the rear light 54 as the operation target device.

(5-3-5. Leftward Direction)

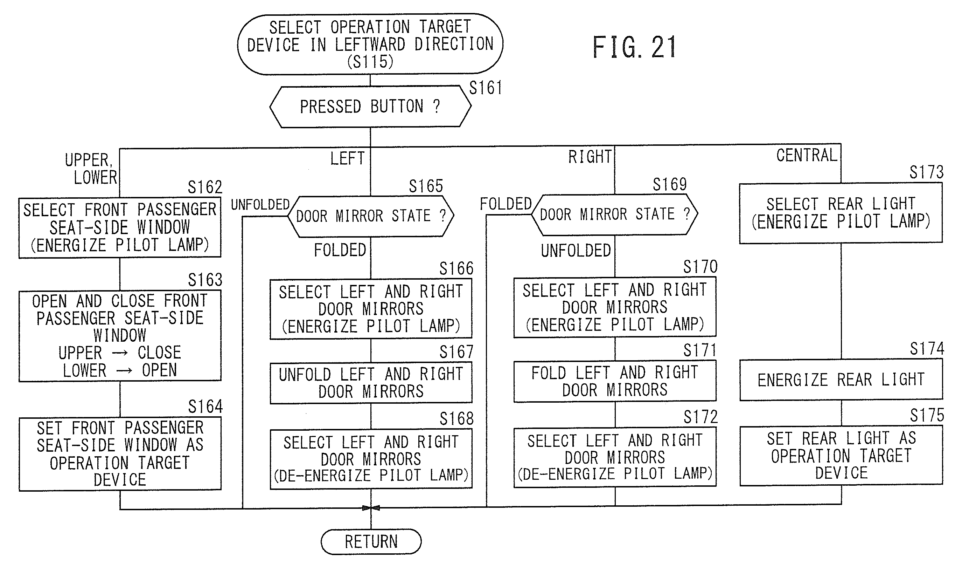

FIG. 21 is a flowchart of a sequence of operations for selecting an operation target device when the viewing direction X of the driver 100 is the leftward direction (area A4) (details of S115 in FIG. 17). In step S161, the ECU 24 judges whether the pressed button on the cross key 18 is the upper button 32, the central button 30, the lower button 34, the right button 38, or the left button 36.

If the pressed button is the upper button 32 or the lower button 34, then in step S162, the ECU 24 selects the front passenger seat-side window 58 and energizes the left pilot lamp 22d. In step S163, the ECU 24 opens or closes the front passenger seat-side window 58. More specifically, if the lower button 34 is pressed, the ECU 24 opens the front passenger seat-side window 58, and if the upper button 32 is pressed, the ECU 24 closes the front passenger seat-side window 58. In step S164, the ECU 24 sets the front passenger seat-side window 58 as the operation target device.

If the pressed button is the left button 36, then in step S165, the ECU 24 confirms the state (unfolded or folded) of the door mirror 52. If the door mirror 52 is in an unfolded state, the ECU 24 brings the present operation sequence to an end. If the door mirror 52 is in a folded state, then in step S166, the ECU 24 selects both the left and right door mirrors 52 and energizes the left pilot lamp 22d.

In step S167, the ECU 24 unfolds the left and right door mirrors 52. In step S168, the ECU 24 selects the left and right door mirrors 52 and deenergizes the left pilot lamp 22d.

If the pressed button is the right button 38, then in step S169, the ECU 24 confirms the state (unfolded or folded) of the door mirror 52. If the door mirror 52 is in a folded state, the ECU 24 brings the present operation sequence to an end. If the door mirror 52 is in an unfolded state, then in step S170, the ECU 24 selects the left and right door mirrors 52 and energizes the left pilot lamp 22d.

In step S171, the ECU 24 folds the left and right door mirrors 52. In step S172, the ECU 24 selects the left and right door mirrors 52 and deenergizes the left pilot lamp 22d.

If the pressed button is the central button 30, then in step S173, the ECU 24 selects the rear light 54 and energizes the left pilot lamp 22d. In step S174, the ECU 24 energizes the rear light 54. In step S175, the ECU 24 sets the rear light 54 as the operation target device.

[5-4. Operating an Operation Target Device (S5 in FIG. 11)]

(5-4-1. Summary)

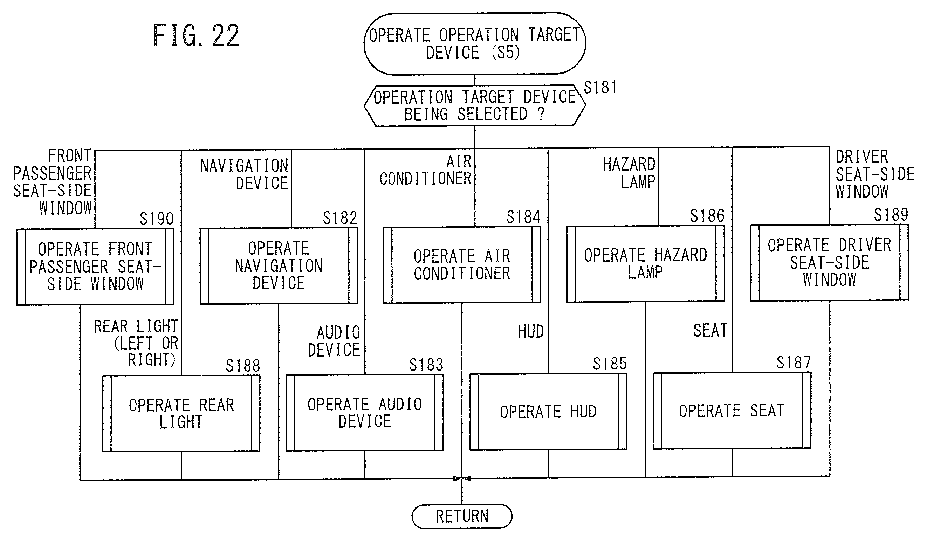

FIG. 22 is a flowchart of a sequence of operations of the ECU 24 for operating a given operation target device (details of S5 in FIG. 11). In step S181, the ECU 24 confirms the operation target device, which has been selected in step S4 in FIG. 11. If the selected operation target device is the navigation device 40, the ECU 24 operates the navigation device 40 in step S182. If the selected operation target device is the audio device 42, the ECU 24 operates the audio device 42 in step S183. If the selected operation target device is the air conditioner 44, the ECU 24 operates the air conditioner 44 in step S184.

If the selected operation target device is the HUD 46, the ECU 24 operates the HUD 46 in step S185. If the selected operation target device is the hazard lamp 48, the ECU 24 operates the hazard lamp 48 in step S186. If the selected operation target device is the seat 50, the ECU 24 operates the seat 50 in step S187. If the selected operation target device is the rear light 54, the ECU 24 operates the rear light 54 in step S188. If the selected operation target device is the driver seat-side window 56, the ECU 24 operates the driver seat-side window 56 in step S189. If the selected operation target device is the front passenger seat-side window 58, the ECU 24 operates the front passenger seat-side window 58 in step S190.

(5-4-2. Operations of Navigation Device 40)

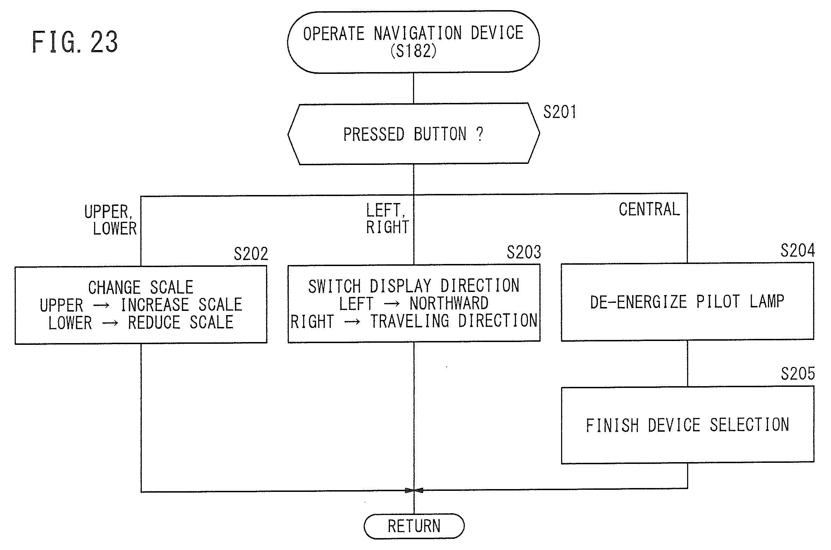

FIG. 23 is a flowchart of a sequence for operating the navigation device 40 (details of S182 in FIG. 22). In step S201, the ECU 24 judges whether the pressed button on the cross key 18 is the central button 30, the upper button 32, the lower button 34, the left button 36, or the right button 38.
If the pressed button is the upper button 32 or the lower button 34, then in step S202, the ECU 24 changes the display scale of the navigation device 40. More specifically, if the upper button 32 is pressed, the ECU 24 increases the display scale, and if the lower button 34 is pressed, the ECU 24 reduces the display scale.
If the pressed button is the left button 36 or the right button 38, then in step S203, the ECU 24 switches the navigation device 40 from one display direction to another display direction. More specifically, if the left button 36 is pressed, the ECU 24 switches to a northward display direction, and if the right button 38 is pressed, the ECU 24 switches to a display direction that is indicative of the traveling direction of the vehicle 10.
If the pressed button is the central button 30, then in step S204, the ECU 24 deenergizes the central pilot lamp 22a. In step S205, the ECU 24 finishes selecting the operation target device.

(5-4-3. Operations of Audio Device 42)

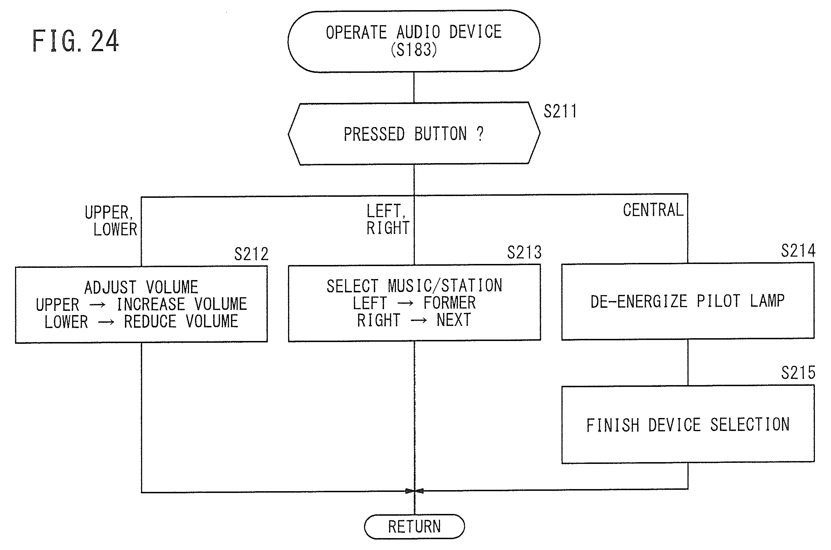

FIG. 24 is a flowchart of a sequence for operating the audio device 42 (details of S183 in FIG. 22). In step S211, the ECU 24 judges whether the pressed button on the cross key 18 is the central button 30, the upper button 32, the lower button 34, the left button 36, or the right button 38.
If the pressed button is the upper button 32 or the lower button 34, then in step S212, the ECU 24 adjusts the volume of the audio device 42. More specifically, if the upper button 32 is pressed, the ECU 24 increases the volume, and if the lower button 34 is pressed, the ECU 24 reduces the volume.
If the pressed button is the left button 36 or the right button 38, then in step S213, the ECU 24 switches the audio device 42 from one piece of music to another piece of music, or from one station to another station. More specifically, if the left button 36 is pressed, the ECU 24 switches to a former piece of music or a preceding station, and if the right button 38 is pressed, the ECU 24 switches to a next piece of music or a next station.
If the pressed button is the central button 30, then in step S214, the ECU 24 deenergizes the central pilot lamp 22a. In step S215, the ECU 24 finishes selecting the operation target device.

(5-4-4. Operations of Air Conditioner 44)

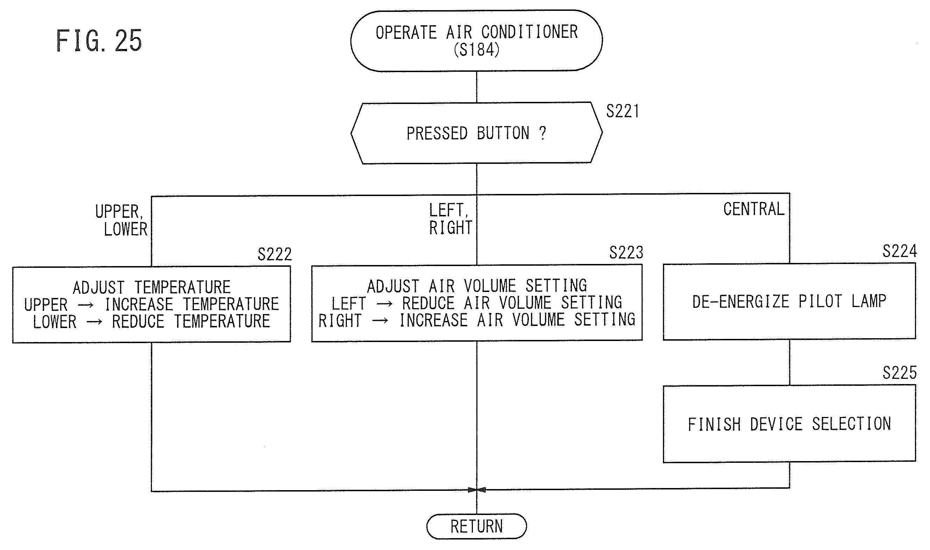

FIG. 25 is a flowchart of a sequence for operating the air conditioner 44 (details of S184 in FIG. 22). In step S221, the ECU 24 judges whether the pressed button on the cross key 18 is the central button 30, the upper button 32, the lower button 34, the left button 36, or the right button 38.
If the pressed button is the upper button 32 or the lower button 34, then in step S222, the ECU 24 adjusts the temperature setting of the air conditioner 44. More specifically, if the upper button 32 is pressed, the ECU 24 increases the temperature setting, and if the lower button 34 is pressed, the ECU 24 reduces the temperature setting.
If the pressed button is the left button 36 or the right button 38, then in step S223, the ECU 24 adjusts the air volume setting of the air conditioner 44. More specifically, if the left button 36 is pressed, the ECU 24 reduces the air volume setting, and if the right button 38 is pressed, the ECU 24 increases the air volume setting.
If the pressed button is the central button 30, then in step S224, the ECU 24 deenergizes the central pilot lamp 22a. In step S225, the ECU 24 finishes selecting the operation target device.

(5-4-5. Operations of HUD 46)

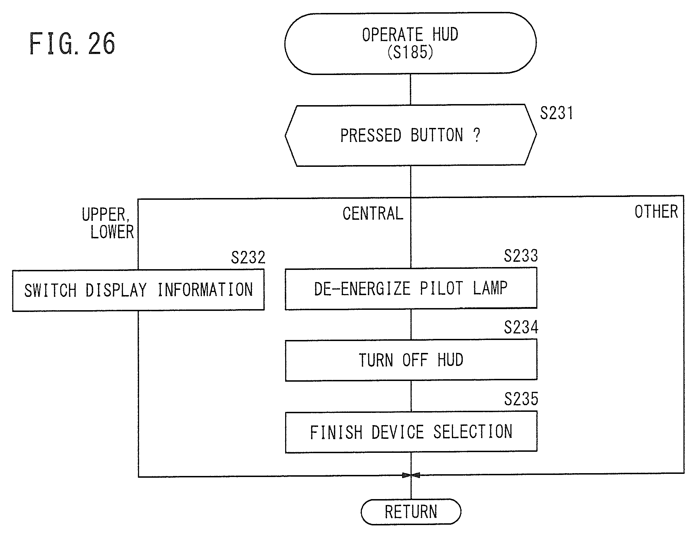

FIG. 26 is a flowchart of a sequence for operating the HUD 46 (details of S185 in FIG. 22). In step S231, the ECU 24 judges whether the pressed button on the cross key 18 is the central button 30, the upper button 32, the lower button 34, or any other button.
If the pressed button is the upper button 32 or the lower button 34, then in step S232, the ECU 24 switches from one displayed item to another displayed item on the HUD 46. For example, if the upper button 32 is pressed, the ECU 24 switches from one displayed item to another displayed item according to a sequence from the vehicle speed 110, to the traveled distance 112, to the mileage 114, to the vehicle speed 110, to the traveled distance 112, to ... (see FIG. 7C). Conversely, if the lower button 34 is pressed, the ECU 24 switches from one displayed item to another displayed item according to a sequence from the vehicle speed 110, to the mileage 114, to the traveled distance 112, to the vehicle speed 110, to the mileage 114, to ....

If the pressed button is the central button 30, then in step S233, the ECU 24 deenergizes the front pilot lamp 22b. In step S234, the ECU 24 turns off the HUD 46. In step S235, the ECU 24 finishes selecting the operation target device.

If the pressed button is one of the other buttons (the left button 36 or the right button 38), the ECU 24 brings the present operation sequence to an end.

(5-4-6. Operations of Hazard Lamp 48)

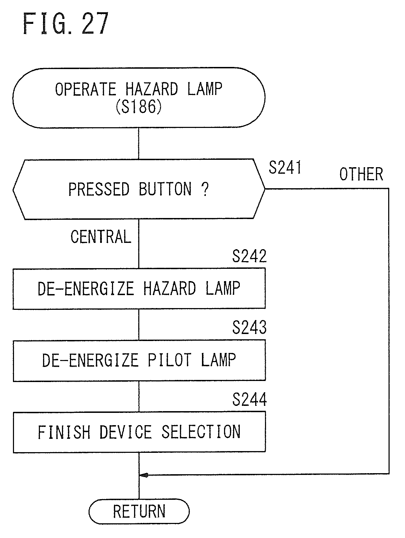

FIG. 27 is a flowchart of a sequence for operating the hazard lamp 48 (details of S186 in FIG. 22). In step S241, the ECU 24 judges whether the pressed button on the cross key 18 is the central button 30 or any other button.

If the pressed button is the central button 30, then in step S242, the ECU 24 deenergizes the hazard lamp 48. In step S243, the ECU 24 deenergizes the front pilot lamp 22b. In step S244, the ECU 24 finishes selecting the operation target device.

If the pressed button is one of the other buttons (the upper button 32, the lower button 34, the left button 36, or the right button 38), the ECU 24 brings the present operation sequence to an end.

(5-4-7. Operations of the Seat 50)

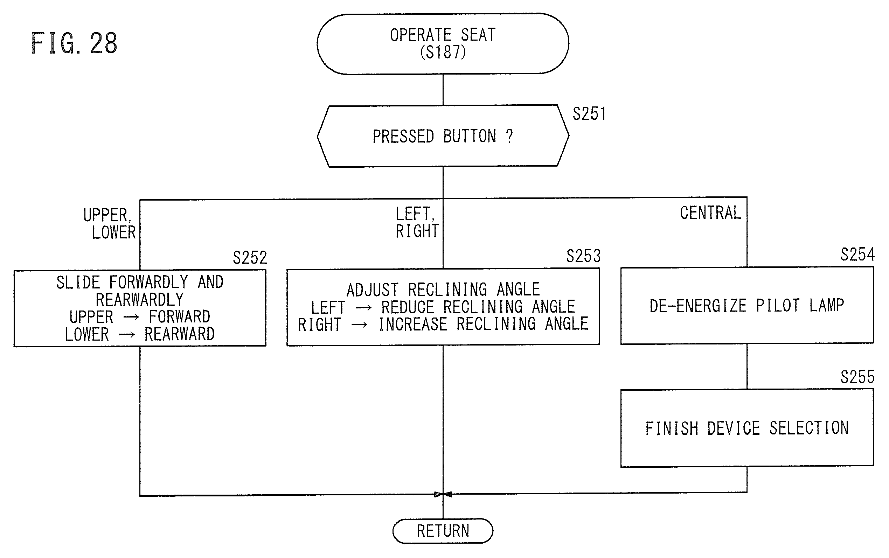

FIG. 28 is a flowchart of a sequence for operating the seat 50 of the driver 100 (details of S187 in FIG. 22). In step S251, the ECU 24 judges whether the pressed button on the cross key 18 is the central button 30, the upper button 32, the lower button 34, the left button 36, or the right button 38.

If the pressed button is the upper button 32 or the lower button 34, then in step S252, the ECU 24 slides the seat 50 forward or rearward. More specifically, if the upper button 32 is pressed, the ECU 24 slides the seat 50 forward, and if the lower button 34 is pressed, the ECU 24 slides the seat 50 rearward.

If the pressed button is the left button 36 or the right button 38, then in step S253, the ECU 24 adjusts the reclining angle of the seat 50. More specifically, if the left button 36 is pressed, the ECU 24 reduces the reclining angle, and if the right button 38 is pressed, the ECU 24 increases the reclining angle.

If the pressed button is the central button 30, then in step S254, the ECU 24 deenergizes the front pilot lamp 22b. In step S255, the ECU 24 finishes selecting the operation target device.

(5-4-8. Operation of Rear Light 54)

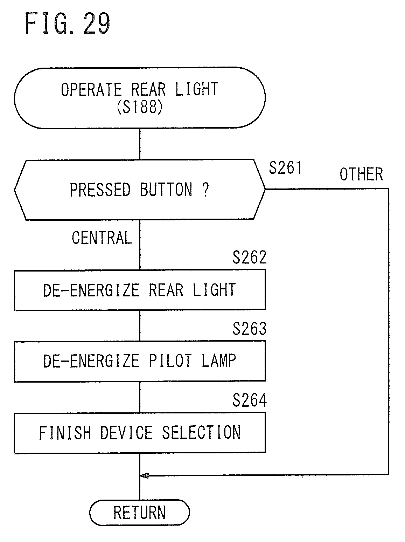

FIG. 29 is a flowchart of a sequence for operating the rear light 54 (details of S188 in FIG. 22). In step S261, the ECU 24 judges whether the pressed button on the cross key 18 is the central button 30 or any other button.

If the pressed button is the central button 30, then in step S262, the ECU 24 deenergizes the rear light 54. In step S263, the ECU 24 deenergizes the right pilot lamp 22c or the left pilot lamp 22d, which has been energized up to this point. In step S264, the ECU 24 finishes the selection of the operation target device.

If the pressed button is one of the other buttons (the upper button 32, the lower button 34, the left button 36, or the right button 38), the ECU 24 brings the present operation sequence to an end.

(5-4-9. Operations of Driver Seat-Side Window 56)

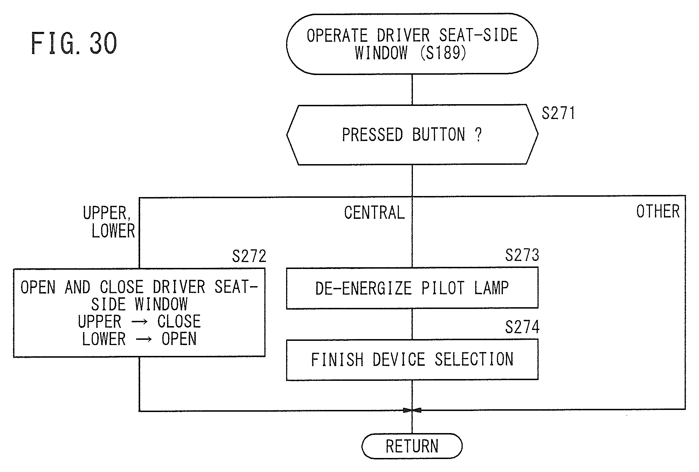

FIG. 30 is a flowchart of a sequence for operating the driver seat-side window 56 (details of S189 in FIG. 22). In step S271, the ECU 24 judges whether the pressed button on the cross key 18 is the central button 30, the upper button 32, the lower button 34, or any other button.

If the pressed button is the upper button 32 or the lower button 34, then in step S272, the ECU 24 opens or closes the driver seat-side window 56. More specifically, if the lower button 34 is pressed, the ECU 24 opens the driver seat-side window 56, and if the upper button 32 is pressed, the ECU 24 closes the driver seat-side window 56.

If the pressed button is the central button 30, then in step S273, the ECU 24 deenergizes the right pilot lamp 22c. In step S274, the ECU 24 finishes selecting the operation target device.

If the pressed button is one of the other buttons (the left button 36 or the right button 38), the ECU 24 brings the present operation sequence to an end.

(5-4-10. Operations of Front Passenger Seat-Side Window 58)

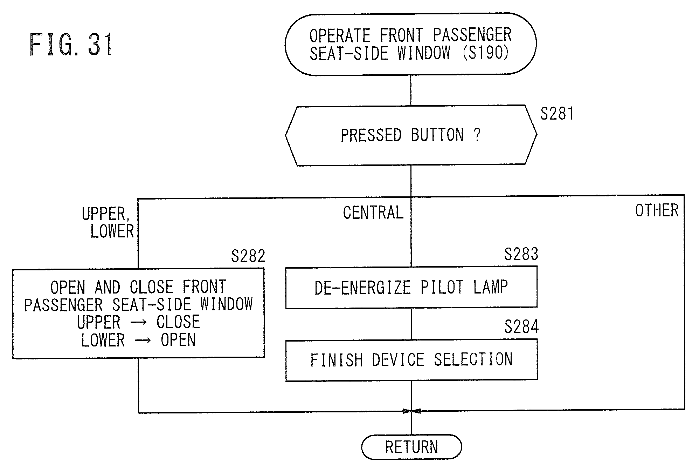

FIG. 31 is a flowchart of a sequence for operating the front passenger seat-side window 58 (details of S190 in FIG. 22). In step S281, the ECU 24 judges whether the pressed button on the cross key 18 is the central button 30, the upper button 32, the lower button 34, or any other button.

If the pressed button is the upper button 32 or the lower button 34, then in step S282, the ECU 24 opens or closes the front passenger seat-side window 58. More specifically, if the lower button 34 is pressed, the ECU 24 opens the front passenger seat-side window 58, and if the upper button 32 is pressed, the ECU 24 closes the front passenger seat-side window 58.

If the pressed button is the central button 30, then in step S283, the ECU 24 deenergizes the left pilot lamp 22d. In step S284, the ECU 24 finishes selecting the operation target device.

If the pressed button is one of the other buttons (the left button 36 or the right button 38), the ECU 24 brings the present operation sequence to an end.

6. Advantages of the Present Embodiment:

As described above, in accordance with the present embodiment, using the nostrils 124, the facial direction $\theta$ of the driver 100 is detected. For this reason, for example, by using the present embodiment in addition to the conventional technique of detecting the eyes (US 2010/0014759 A1), accuracy and precision in detecting the facial direction or the direction of the line of sight can be enhanced. Further, the facial direction $\theta$ is detectable even in cases where the driver 100 is wearing glasses or sunglasses. Accordingly, compared to the case of detecting a line of sight direction, for which detection may become impossible in cases where the driver 100 is wearing glasses or sunglasses, it is possible to widen the field of applications for the present invention. Further, in the case of detecting changes in the facial direction $\theta$, compared to the eyebrows 120, the eyes 122, the mustache 126, or the mouth 128, because the nostrils 124 are at positions relatively distanced from the axis of rotation A, the amount of movement becomes relatively large accompanying changes in the facial direction 8. Therefore, by making use of the nostrils 124, changes in the facial direction $\theta$ can be detected with high precision.

Moreover, according to the present embodiment, facial end lines E1, E2 are detected from within the facial image 90 (step S13 of FIG. 13), and the axis of rotation A is calculated based on the facial end lines E1, E2 (step S14). Further, a plurality of characteristic portions are extracted from within the facial image 90 (step S18), and the characteristic portions having the greatest amount of movement from among the extracted multiple characteristic portions are extracted as the nostrils 124 (step S19). In addition, the facial direction $\theta$ is detected using the extracted nostrils 124 and the calculated axis of rotation A (step S22). Owing thereto, a novel detection method in relation to the facial direction 8 can be provided. In addition, due to the detection method of multiple characteristic portions, and the method of calculating the amount of movement of each of the characteristic portions, the processing load can be lightened.

In the present embodiment, when the ECU 24 extracts the characteristic portions, multiple black colored areas having a predetermined size are extracted as plural characteristic portions from the facial image 90, and the characteristic portions for which the amount of movement thereof is the greatest from among the plural extracted characteristic portions are extracted as the nostrils 124.

The black colored areas (low luminance areas) that possess the predetermined size in the facial image 90 are limited in accordance with the predetermined size. For example, depending on race or ethnicity, the colors of the eyebrows 120, the eyes 122 (pupils), the mustache 126, etc., are black in color (or of low luminance) intrinsically, and in addition, the nostrils 124 and the mouth 128 (inner mouth), etc., also are black in color (or of low luminance) as a result of shadows formed thereby. Such black colored areas, which are treated as extraction objects, can be limited in number, together with enabling binary processing (binarization) to be performed corresponding to the luminance thereof. Owing thereto, comparatively simple and high precision processing can be carried out.

In the present embodiment, the ECU 24 treats the area inside of the facial end lines E1, E2 as a nostril candidate extraction area R (see FIG. 14D), and the ECU 24 extracts a plurality of black colored areas, which possess a predetermined size, from within the nostril candidate extraction area R. Consequently, since the extraction areas for the nostrils 124 can be limited in number, the computational load is lessened and processing speed can be increased.

In the present embodiment, facial end lines E1, E2 from the facial image 90, which is captured by the passenger camera 14, are detected, and the ECU 24 identifies a vehicle-mounted device 20 based on the detected facial direction $\theta$. In a vehicle 10 in which a vehicle-mounted device 20, to which the driver's face 80 is turned in a direction of the vehicle-mounted device 20 that the driver 100 intends to operate, is identified as an operation target device, cases may be frequent in which the angle of rotation of the face 80 is comparatively large in order to operate the vehicle-mounted device 20. As a result, since the detection accuracy of the nostrils 124 can be increased through application of the present embodiment, precision in detecting the facial direction $\theta$ can be enhanced.

7. Modifications:

The present invention is not limited to the above embodiment, but various alternative arrangements may be adopted based on the disclosed content of the present description. For example, the present invention may employ the following arrangements.

[7-1. Carriers and Carrier Applications]

According to the above embodiment, the operating apparatus 12 is incorporated in the vehicle 10. However, the operating apparatus 12 may be incorporated in other types of carriers. For example, the operating apparatus 12 may be incorporated in mobile bodies such as ships, airplanes, etc. The operating apparatus 12 is not necessarily incorporated in mobile bodies, but may be incorporated in other apparatus insofar as such apparatus need to identify the viewing direction of a person being observed.

In the above embodiment, although detection of the facial direction $\theta$ in the operating apparatus 12 is used to identify an operation target device, the invention is not limited thereby insofar as the apparatus requires identification of the viewing direction of a subject. For example, the apparatus can also be used in order to detect inattentiveness of the driver 100.

[7-2. Detection of Viewing Direction X]

A passenger whose viewing direction X is to be detected is not limited to the driver 100, but may be another passenger (a passenger sitting in the front passenger seat, or a passenger sitting in a rear seat, etc.)

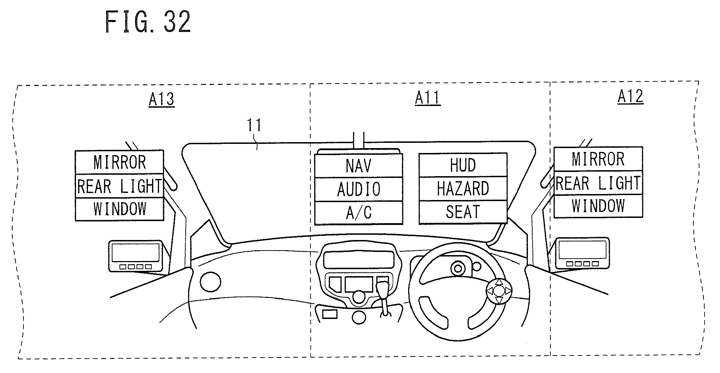

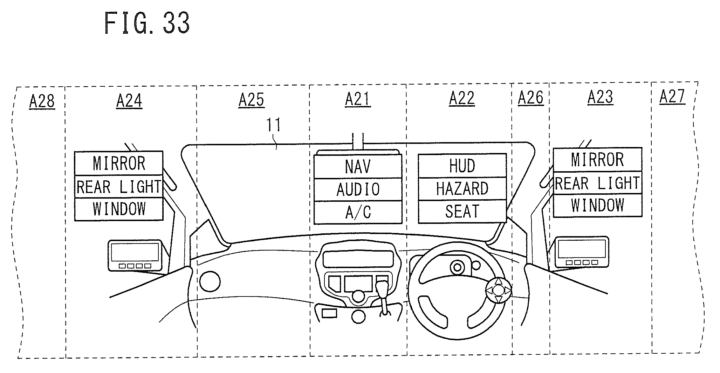

According to the above embodiment, the front windshield 11 area is divided into five areas A1 through A5 (FIG. 5). However, the number of areas is not limited to the illustrated number of five. As shown in FIG. 32, the front windshield 11 area may be divided into three areas A11 through A13. Alternatively, as shown in FIG. 33, the front windshield 11 area may be divided into eight areas A21 through A28.

In the present embodiment, although detection of the viewing direction X is handled through detection of the facial direction $\theta$ in the widthwise direction of the vehicle (left and right directions in relation to the driver 100), the invention is not limited to this feature, so long as the above-described cylinder method (or stated otherwise, the angle of rotation of the face 80 about the axis of rotation A of the face 80, i.e., the facial direction $\theta$) is used, and a direction of inclination in the vertical or oblique direction can be used as well.

In the present embodiment, when the nostrils 124 are extracted, although black colored areas are extracted as characteristic points (see step S18 in FIG. 13, and FIG. 14E), it is not strictly necessary for black colored areas to be extracted. For example, the nostrils 124 can also be extracted from each of the edges themselves, which are extracted in step S12 (edge processing step) of FIG. 13.

In the above-described embodiment, although the aforementioned equation (3) was used to calculate the facial direction $\theta$, the invention is not limited to this feature, so long as the facial direction $\theta$ can be detected. For example, in FIG. 15, if the radius of the face 80 and the line segment LQ are calculated, the facial direction $\theta$ can also be detected from the equality $\sin \theta = LQ/r$. Further, in FIG. 15, assuming that the positional relationship between the projection Ap of the axis of rotation A and the projection Lp of the center line L in the image plane P is known, it is possible to judge whether the face of the driver 100 is turned to the left or right. Furthermore, the facial direction $\theta$ can be calculated by calculating the radius r and the line segment LQ, etc. Alternatively, it is possible to set the radius r to a given predetermined value.

In the present embodiment, although the nostrils 124 are detected in order to detect the viewing direction X, the invention is not limited to detecting nostrils 124 per se. Another characteristic portion (for example, glasses or eyelashes) can be used, so long as the amount of movement thereof is large so as to enable the center line L of the face 80 to be detected thereby.

[7-3. Identification of Operation Target Device]

According to the above embodiment, an operation target device is identified along the widthwise direction of the vehicle 10 based on the facial direction $\theta$, and also is identified along the heightwise direction of the vehicle 10 by operating the cross key 18. However, the present invention is not limited to such a process, insofar as an operation target device is capable of being identified along the widthwise direction based on the facial direction $\theta$. For example, in addition to the facial direction $\theta$ in the widthwise direction of the vehicle, the viewing direction may be detected together therewith, for use in the case that the facial direction $\theta$ can be corrected. Otherwise, when the facial direction $\theta$ cannot be detected (for example, if the driver is wearing a mask and the nostrils cannot be detected), the viewing direction may be detected for use. Alternatively, for example, an operation target device may be identified along the heightwise direction of the vehicle 10 based on the viewing direction. Alternatively, only one vehicle-mounted device 20 within each area may be identified along the heightwise direction, and then a vehicle-mounted device 20 may be identified along the widthwise direction.

According to the above embodiment, an operation target device is identified using the flowcharts shown in FIGS. 11, 13, and 17 through 21. However, the process of identifying an operation target device is not limited to the disclosed embodiment, insofar as a vehicle-mounted device group (groups A through D) is identified along the widthwise direction of the vehicle 10, and an operation target device is identified along the heightwise direction of the vehicle 10. According to the flowchart shown in FIG. 11, step S2 judges whether or not one of the buttons on the cross key 18 has been pressed. However, such a judgment step may be dispensed with (e.g., step S2 may be combined with step S111 shown in FIG. 17). According to the flowcharts shown in FIGS. 18 through 21, a pilot lamp 22 corresponding to a selected operation target device is energized. However, a pilot lamp 22 need not necessarily be energized.

[7-4. Operation Means]

According to the above embodiment, the cross key 18 is used as a means (operation means) that is operated by the driver 100 (passenger) to identify an operation target device. However, such an operation means is not limited to the cross key 18, in view of the fact that vehicle-mounted devices 20, which are vertically arranged in each of the vehicle-mounted device groups (groups A through D), are identified or selected. Although the cross key 18 according to the above embodiment includes the central button 30, the upper button 32, the lower button 34, the left button 36, and the right button 38, the cross key 18 may have only the upper button 32 and the lower button 34, or only the central button 30, the upper button 32, and the lower button 34. Alternatively, the buttons may be joined together (e.g., the cross button pad as shown in FIG. 4 of Japanese Laid-Open Patent Publication No. 2010-105417 may be used). Each of the buttons on the cross key 18 comprises a pushbutton switch (see FIG. 3). However, the buttons may be constituted by other types of switches, including a slide switch, a lever switch, or the like.

According to the above embodiment, the cross key 18 serves as a means for identifying an operation target device from among the vehicle-mounted device groups (groups A through D), as well as a means for operating the identified operation target device. However, a different means for operating the identified operation target device may be provided separately.

According to the above embodiment, the cross key 18 is mounted on the steering wheel 16. However, the cross key 18 is not limited to such a position, and may be disposed in a position such as on the steering column or on an instrument panel.

[7-5. Vehicle-Mounted Devices 20 and Vehicle-Mounted Device Groups]

According to the above embodiment, the vehicle-mounted devices 20 include the navigation device 40, the audio device 42, the air conditioner 44, the HUD 46, the hazard lamp 48, the seat 50, the door mirrors 52, the rear lights 54, the driver seat-side window 56, and the front passenger seat-side window 58. However, the vehicle-mounted devices 20 are not limited to such devices, but may be a plurality of vehicle-mounted devices, which are operable by passengers in the vehicle 10, insofar as the devices are arranged in the widthwise direction of the vehicle. Further, a single vehicle-mounted device may be disposed in each of the areas A1 through A5.

A facial direction detecting apparatus (12) includes a nostril extracting unit (24) for extracting the nostrils (124) of a person (100) from among multiple characteristic portions (120, 122, 124, 126, 128) that are extracted by a characteristic portion extracting unit (24). The nostril extracting unit (24) extracts the nostrils (124) as the characteristic portion having a greatest amount of movement from among all of the multiple characteristic portions (120, 122, 124, 126, 128).

**Claims**

1.  A facial direction detecting apparatus (12) comprising:

    a facial end detecting unit (24) for detecting facial ends (E1, E2) of a person (100) from images of the person (100) (hereinafter referred to as "personal images (90)") captured by an image capturing unit (14);
    a head rotational axis calculating unit (24) for calculating an axis of rotation (A) of the head of the person (100) based on the ends (E1, E2) detected by the facial end detecting unit (24) from the personal images (90), using a cylinder method;
    a characteristic portion extracting unit (24) for extracting multiple characteristic portions (120, 122, 124, 126, 128) having a predetermined size from the personal images (90);
    a nostril extracting unit (24) for extracting the nostrils (124) of the person (100) from among the multiple characteristic portions (120, 122, 124, 126, 128) extracted by the characteristic portion extracting unit (24) and a vertical center line (L) defined by the positions of the nostrils (124); and

a facial direction detecting unit (24) for detecting a facial direction (θ) toward the left or right of the person (100) corresponding to the vertical center line (L) extracted by the nostril extracting unit (24) and the axis of rotation (A) of the head calculated by the head rotational axis calculating unit (24),

**characterized in that**

the nostril extracting unit (24) extracts characteristic portions detected to have the greatest movement amount as the nostrils (124), wherein the movement amounts are defined as a difference in left and right directions of the multiple characteristic points in at least two frames of personal images.

2.   The facial direction detecting apparatus (12) according to claim 1,
wherein the characteristic portion extracting unit (24) comprises:

a low luminance area extracting unit (24) for extracting, as the multiple characteristic portions (120, 122, 124, 126, 128) from the personal images (90), multiple low luminance areas having a predetermined size and for which a luminance thereof is lower than a predetermined luminance,
wherein the nostril extracting unit (24) extracts, as the nostril (124), a low luminance area for which an amount of movement thereof is greatest from among the multiple low luminance areas extracted by the low luminance area extracting unit (24).

3.   The facial direction detecting apparatus (12) according to claim 2, wherein the low luminance area extracting unit (24) treats an inner side of the facial ends (E1, E2) detected by the facial end detecting unit (24) as a nostril candidate extraction area (R), and extracts multiple low luminance areas having a predetermined size only from within the nostril candidate extraction area (R).

4.   The facial direction detecting apparatus (12) according to any one of claims 1 through 3, further comprising:

a plurality of vehicle-mounted devices (20) mounted in a vehicle (10) and which are capable of being operated by a passenger (100) of the vehicle (10); and
a vehicle-mounted device identifying unit (72) for identifying any one of the vehicle-mounted devices (20) from among the multiple vehicle-mounted devices (20) based on the facial direction (8) detected by the facial direction detecting unit (24),
wherein the facial end calculating unit (24) treats the facial images (90) of the passenger (100), which was captured by the image capturing unit (14), as the personal images (90), and detects the facial ends (E1, E2) of the passenger (100), and
wherein the vehicle-mounted device identifying unit (72) identifies the vehicle-mounted device (20) based on the facial direction (θ) detected by the facial direction detecting unit (24).

**Patentansprüche**

1.   Gesichtsrichtungserkennungsvorrichtung (12), welche aufweist:

eine Gesichtsende-Erkennungseinheit (24) zum Erkennen von Gesichtsenden (E1, E2) einer Person (100) aus Bildern der Person (100) (nachfolgend als "Personenbilder (90)" bezeichnet), die von einer Bildaufnahmeeinheit (14) aufgenommen werden;
eine Kopfdrehachsenberechnungseinheit (24) zum Berechnen einer Drehachse (A) vom Kopf der Person (100) basierend auf den Enden (E1, E2), die von der Gesichtsende-Erkennungseinheit (24) aus den Personenbildern (90) erkannt werden, unter Verwendung einer Zylindermethode;
eine Charakteristischer-Abschnitt-Extraktionseinheit (24) zum Extrahieren von mehreren charakteristischen Abschnitten (120, 122, 124, 126, 128), die eine vorbestimmte Größe haben, aus den Personenbildern (90);
eine Nasenloch-Extraktionseinheit (24) zum Extrahieren von Nasenlöchern (124) der Person (100) unter den mehreren charakteristischen Abschnitten (120, 122, 124, 126, 128), die von der Charakteristischer-Abschnitt-Extraktionseinheit (24) extrahiert sind, und einer vertikalen Mittellinie (L), die durch die Positionen der Nasenlöcher (124) definiert ist; und
eine Gesichtsrichtung-Erkennungseinheit (24) zum Erkennen einer Gesichtsrichtung (θ) nach links oder rechts der Person (100) entsprechend der von der Nasenloch-Extraktionseinheit (24) extrahierten vertikalen Mittellinie (L) und der von der Kopfdrehachsen-Berechnungseinheit (24) berechneten Drehachse (A) vom Kopf,

**dadurch gekennzeichnet, dass**

die Nasenloch-Extraktionseinheit (24) charakteristische Abschnitte, von denen erkannt wird, dass sie den größten Bewegungsbetrag haben, als die Nasenlöcher (124) extrahiert, wobei die Bewegungsbeträge als Differenz in Links- und Rechtsrichtungen der mehreren charakteristischen Punkte in zumindest zwei Aufnahmen der Personenbilder definiert sind.

2. Die Gesichtsrichtungserkennungsvorrichtung (12) nach Anspruch 1,
wobei die Charakteristischer-Abschnitt-Extraktionseinheit (24) aufweist:

eine Niederluminanzbereich-Extraktionseinheit (24), um, als die mehreren charakteristischen Abschnitte (120, 122, 124, 126, 128), aus den Personenbildern (90) mehrere Niederluminanzbereiche mit einer vorbestimmten Größe und deren Luminanz niedriger ist als eine vorbestimmte Luminanz zu extrahieren,
wobei die Nasenloch-Extraktionseinheit (24), als das Nasenloch (124) einen Niederluminanzbereich extrahiert, dessen Bewegungsbetrag unter den mehreren von der Niederluminanzbereich-Extraktionseinheit (24) extrahierten Niederluminanzbereichen am größten ist.

3. Die Gesichtsrichtungserkennungsvorrichtung (12) nach Anspruch 2, wobei die Niederluminanzbereich-Extraktionseinheit (24) eine Innenseite der von der Gesichtsende-Erkennungseinheit (24) erkannten Gesichtsenden (E1, E2) als Nasenlochkandidat-Extraktionsbereich (R) behandelt, und mehrere Niederluminanzbereiche mit vorbestimmter Größe nur von innerhalb des Nasenlochkandidat-Extraktionsbereichs (R) extrahiert.

4. Die Gesichtsrichtungserkennungsvorrichtung (12) nach einem der Ansprüche 1 bis 3, die ferner aufweist:

eine Mehrzahl von am Fahrzeug angebrachten Vorrichtungen (20), die in einem Fahrzeug (10) angebracht sind und die in der Lage sind, von einem Insassen (100) des Fahrzeugs (10) bedient zu werden; und
eine am Fahrzeug angebrachte Vorrichtung-Identifikationseinheit (72) zum Identifizieren einer der am Fahrzeug angebrachten Vorrichtungen (20) unter den mehreren am Fahrzeug angebrachten Vorrichtungen (20) basierend auf der von der Gesichtsrichtung-Erkennungseinheit (24) erkannten Gesichtsrichtung (θ),
wobei die Gesichtsende-Berechnungseinheit (24) die Gesichtsbilder (90) des Insassen (100), die von der Bildaufnahmeeinheit (14) aufgenommen wurden, als die Personenbilder (90) behandelt, und die Gesichtsenden (E1, E2) des Insassen (100) detektiert, und
wobei die am Fahrzeug angebrachte Vorrichtung-Identifikationseinheit (72) die am Fahrzeug angebrachte Vorrichtung (20) basierend auf der von der Gesichtsrichtung-Erkennungseinheit (24) erkannten Gesichtsrichtung (θ) identifiziert.

**Revendications**

1. Appareil de détection de direction faciale (12) comprenant :

une unité de détection d'extrémité faciale (24) permettant de détecter des extrémités faciales (E1, E2) d'une personne (100) à partir d'images de la personne (100) (ci-après désignée par « images personnelles (90) ») capturées par une unité de capture d'images (14) ;
une unité de calcul d'axe de rotation de tête (24) permettant de calculer un axe de rotation (A) de la tête de la personne (100) en se basant sur les extrémités (E1, E2) détectées par l'unité de détection d'extrémité faciale (24) à partir des images personnelles (90), à l'aide d'une méthode du cylindre ;
une unité d'extraction de portions caractéristiques (24) permettant d'extraire de multiples portions caractéristiques (120, 122, 124, 126, 128) ayant une taille prédéterminée à partir des images personnelles (90) ;
une unité d'extraction de narines (24) permettant d'extraire les narines (124) de la personne (100) parmi les multiples portions caractéristiques (120, 122, 124, 126, 128) extraites par l'unité d'extraction de portions caractéristiques (24) et une ligne centrale verticale (L) définie par les positions des narines (124) ; et
une unité de détection de direction faciale (24) permettant de détecter une direction faciale (θ) vers la gauche ou la droite de la personne (100) correspondant à la ligne centrale verticale (L) extraite par l'unité d'extraction de narines (24) et l'axe de rotation (A) de la tête calculée par l'unité de calcul d'axe de rotation de tête (24),
**caractérisé en ce que**
l'unité d'extraction de narines (24) extrait des portions caractéristiques détectées pour avoir la plus grande quantité de mouvement en tant que les narines (124), dans lequel les quantités de mouvement sont définies comme une différence entre les directions gauche et droite des multiples points caractéristiques dans au moins deux trames d'images personnelles.

2. Appareil de détection de direction faciale (12) selon la revendication 1, dans lequel l'unité d'extraction de portions caractéristiques (24) comprend:

une unité d'extraction de zone de basse luminance (24) permettant d'extraire, en tant que les multiples portions caractéristiques (120, 122, 124, 126, 128) à partir des images personnelles (90), de multiples zones de basse luminance ayant une taille prédéterminée et pour lesquelles une luminance est inférieure à une luminance prédéterminée,

dans lequel l'unité d'extraction de narines (24) extrait, en tant que narine (124), une zone de basse luminance pour laquelle une quantité de mouvement de celle-ci est la plus grande parmi les multiples zones de basse luminance extraites par l'unité d'extraction de zone de basse luminance (24).

3. Appareil de détection de direction faciale (12) selon la revendication 2, dans lequel l'unité d'extraction de zone de basse luminance (24) traite un côté interne des extrémités faciales (E1, E2) détectées par l'unité de détection d'extrémité faciale (24) comme une zone d'extraction candidate de narines (R), et extrait de multiples zones de basse luminance ayant une taille prédéterminée uniquement au sein de la zone d'extraction candidate de narines (R).

4. Appareil de détection de direction faciale (12) selon l'une quelconque des revendications 1 à 3, comprenant en outre :

une pluralité de dispositifs montés sur véhicule (20) monté dans un véhicule (10) et qui sont capables d'être exploités par un passager (100) du véhicule (10) ; et

une unité d'identification de dispositif monté sur véhicule (72) permettant d'identifier l'un quelconque des dispositifs montés sur véhicule (20) parmi les multiples dispositifs montés sur véhicule (20) d'après la direction faciale (θ) détectée par l'unité de détection de direction faciale (24),

dans lequel l'unité de calcul d'extrémité faciale (24) traite les images faciales (90) du passager (100), qui ont été capturées par l'unité de capture d'images (14), comme les images personnelles (90), et détecte les extrémités faciales (E1, E2) du passager (100), et

dans lequel l'unité d'identification de dispositif monté sur véhicule (72) identifie le dispositif monté sur véhicule (20) d'après la direction faciale (θ) détectée par l'unité de détection de direction faciale (24).

FIG. 1

EP 2 573 712 B1

## FIG. 2

FIG. 3

FIG. 4

# FIG. 5

10

# FIG. 6A

10

CENTRAL
(A1)

40 — NAV
42 — AUDIO
44 — A/C

X    100

FIG. 6B

CENTRAL
(A1)

| BUTTON | SELECTION CANDIDATE DEVICE |
|---|---|
| | NAV |
| | AUDIO |
| | A/C |

# FIG. 6C

| BUTTON | ASSIGNED FUNCTION |
|---|---|
| ⊕ | ADJUST VOLUME |
| ⊕ | END |
| ⊕ | SELECT MUSIC, SELECT STATION |

# FIG. 7A

<u>10</u>

FRONTAL
(A2)

46 — | HUD |
48 — | HAZARD |
50 — | SEAT |

X    100

# FIG. 7B

<u>10</u>

FRONTAL
(A2)

46

22b

18

X    100

| BUTTON | SELECTION CANDIDATE DEVICE |
|--------|---------------------------|
| ⊕ | HUD |
| ⊕ | HAZARD |
| ⊕ | SEAT |

# FIG. 7C

10

| BUTTON | ASSIGNED FUNCTION |
|--------|-------------------|
| ⊕ | SWITCH DISPLAYED INFORMATION |
| ⊕ | END (DE-ENERGIZE HUD) |
| ⊕ | — |

45.3 km/h

110

⬇

60905 km

112

⬇

17.8 km/l

114

## FIG. 8A

10

LEFT
(A4)

| MIRROR | —52 |
| REAR LIGHT | —54 |
| WINDOW | —58 |

X

100

FIG. 8B

10

LEFT
(A4)

22d

X    100

18

| BUTTON | SELECTION CANDIDATE DEVICE |
|---|---|
| ⊕ | WINDOW |
| ⊕ | REAR LIGHT |
| ⊕ | DOOR MIRROR |

33

# FIG. 8C

| BUTTON | ASSIGNED FUNCTION |
|:---:|:---:|
| ⊕ | OPEN AND CLOSE |
| ⊕ | END |
| ⊕ | — |

FIG. 9

CENTRAL

| | | |
|---|---|---|
| NAV: | (1) | WHILE FACING IN CENTRAL DIRECTION, PRESS UPPER BUTTON 32 |
| | (2) | INCREASE SCALE WITH UPPER BUTTON 32, REDUCE SCALE WITH LOWER BUTTON 34, SWITCH MAP DIRECTION WITH LEFT BUTTON 36 AND RIGHT BUTTON 38 (NORTHWARD DIRECTION ⇔ TRAVELING DIRECTION) |
| AUDIO: | (1) | WHILE FACING IN CENTRAL DIRECTION, PRESS CENTRAL BUTTON 30 |
| | (2) | ADJUST VOLUME WITH UPPER BUTTON 32 AND LOWER BUTTON 34, SELECT MUSIC OR STATION WITH LEFT AND RIGHT BUTTONS 36, 38 (CD OR RADIO OR ANYTHING BEING ACTIVATED) |
| A/C: | (1) | WHILE FACING IN CENTRAL DIRECTION, PRESS LOWER BUTTON 34 |
| | (2) | ADJUST TEMPERATURE WITH UPPER BUTTON 32 AND LOWER BUTTON 34, ADJUST AIR VOLUME SETTING WITH LEFT AND RIGHT BUTTONS 36, 38 |

FRONTAL

| | | |
|---|---|---|
| HUD: | (1) | WHILE FACING IN CENTRAL DIRECTION, PRESS UPPER BUTTON 32 (HUD IS ACTIVATED) |
| | (2) | SUCCESSIVELY DISPLAY SPEED, DISTANCE, MILEAGE, AMOUNT OF GASOLINE, ETC., WITH UPPER BUTTON 32 AND LOWER BUTTON 34 |
| HAZARD: | (1) | WHILE FACING IN CENTRAL DIRECTION, PRESS CENTRAL BUTTON 30 (HAZARD LAMP BLINKED) |
| SEAT: | (1) | WHILE FACING IN CENTRAL DIRECTION, PRESS LOWER BUTTON 34 (SEAT SLIDING AND RECLINING FUNCTION MADE READY) |
| | (2) | SLIDE FORWARDLY AND REARWARDLY WITH UPPER BUTTON 32 AND LOWER BUTTON 34, ADJUST RECLINING ANGLE WITH LEFT AND RIGHT BUTTONS 36, 38 |

LEFT AND RIGHT

| | | |
|---|---|---|
| DOOR MIRROR: | (1) | WHILE FACING IN RIGHTWARD (LEFTWARD) DIRECTION, PRESS LEFT BUTTON 36 (RIGHT BUTTON 38) TO FOLD MIRROR, PRESS RIGHT BUTTON 38 (LEFT BUTTON 36) TO UNFOLD MIRROR |
| REAR LIGHT: | (1) | WHILE FACING IN RIGHTWARD (LEFTWARD) DIRECTION, PRESS CENTRAL BUTTON 30 TO ENERGIZE REAR LIGHT |
| POWER WINDOW: | (1) | WHILE FACING IN RIGHTWARD (LEFTWARD) DIRECTION, PRESS UPPER BUTTON 32 OR LOWER BUTTON 34 (TO OPEN OR CLOSE WINDOW) |

END WITH CENTRAL BUTTON 30 (EXCEPT MIRROR)

EP 2 573 712 B1

# FIG. 10

| BUTTON OPERATED FOR SELECTING DEVICE | OPERATION TARGET DEVICE | FUNCTION PERFORMED WHEN DEVICE IS SELECTED | ASSIGNMENT AFTER DEVICE IS SELECTED | | |
|---|---|---|---|---|---|
| | | | | | |
| | NAV | — | END | SCALE ADJUSTMENT | MAP DIRECTION SWITCHING |
| | AUDIO | — | END | VOLUME ADJUSTMENT | MUSIC SELECTION (STATION SELECTION) |
| | A/C | — | END | TEMPERATURE ADJUSTMENT | AIR VOLUME SETTING ADJUSTMENT |
| | HUD | HUD ACTIVATION | END | DISPLAY INFORMATION (SPEED, DISTANCE, MILEAGE, ETC.) SWITCHING | — |
| | HAZARD | HAZARD BLINKING | HAZARD DE-ENERGIZATION (END) | — | — |
| | SEAT | — | END | FORWARD AND REARWARD SLIDING | RECLINING ANGLE ADJUSTMENT |
| | DOOR MIRROR | WHEN FACING TO LEFT (RIGHT), LEFT BUTTON: MIRROR UNFOLDING (FOLDING), RIGHT BUTTON: MIRROR FOLDING (UNFOLDING) * AUTOMATICALLY ENDED AFTER OPERATION | — | — | — |
| | REAR LIGHT | LIGHT ENERGIZATION | LIGHT DE-ENERGIZATION (END) | — | — |
| | WINDOW | OPENING AND CLOSING | END | OPENING AND CLOSING | — |

EP 2 573 712 B1

# FIG. 11

```
            ┌──────────────┐
            │    START     │
            └──────┬───────┘
                   │
        ┌──────────┴──────────┐ S1
        │ DETECT VIEWING DIRECTION │
        └──────────┬──────────┘
                   │
      NO  ┌────────┴────────┐ S2
    ┌─────┤  PRESS BUTTON ? │
    │     └────────┬────────┘
    │              │ YES
    │     ┌────────┴────────────┐ S3    YES
    │     │ IS OPERATION TARGET DEVICE ├──────────┐
    │     │   BEING SELECTED ?   │          │
    │     └────────┬────────────┘          │
    │              │ NO                     │
    │     ┌────────┴─────────┐ S4           │
    │     │ SELECT OPERATION TARGET │       │
    │     │      DEVICE      │              │
    │     └────────┬─────────┘              │
    │              │                    S5  │
    │              │         ┌──────────────┴──┐
    │              │         │ OPERATE OPERATION TARGET │
    │              │         │       DEVICE     │
    │              │         └──────────┬───────┘
    │              │                    │
    └──────────────┤◄───────────────────┘
                   │
            ┌──────┴───────┐
            │   RETURN     │
            └──────────────┘
```

FIG. 12

CENTER LINE L OF FACE (HEAD)
AS VIEWED FROM THE FRONT

80

RADIUS r OF
FACE (HEAD)

AXIS OF ROTATION A OF
FACE (HEAD)

# FIG. 13

DETECT VIEWING DIRECTION (S1)

OBTAIN FACIAL IMAGE | S11

(EDGE PROCESSING) EXTRACT CHARACTERISTIC POINTS (FACIAL END LINE CANDIDATES) | S12

DETECT FACIAL END LINES | S13

CALCULATE POSITION OF AXIS OF ROTATION A OF FACE (HEAD) | S14

CALCULATE ANGLE $\alpha$ BETWEEN OPTICAL AXIS Ao AND AXIS OF ROTATION A | S15

CALCULATE RADIUS r OF FACE (HEAD) | S16

NARROW DOWN POTENTIAL NOSTRIL CANDIDATE EXTRACTION AREAS | S17

EXTRACT (BINARIZE) NOSTRIL CANDIDATES | S18

DETECT NOSTRILS | S19

CALCULATE POSITION OF CENTER LINE L | S20

CALCULATE DISTANCE d | S21

CALCULATE FACIAL DIRECTION $\theta$ | S22

RETURN

EP 2 573 712 B1

# FIG. 14A

OBTAIN FACIAL IMAGE

90

# FIG. 14B

EXTRACTION OF CHARACTERISTIC POINTS (EDGE PROCESSING)

# FIG. 14C

DETECTION OF FACIAL END LINES, AND
CALCULATION OF AXIS OF ROTATION A, ANGLE $\alpha$,
AND RADIUS r

END LINE
E2

END LINE
E1

90

ANGLE $\alpha$

RADIUS r OF
FACE (HEAD)

STRAIGHT LINE
INCLUDING
OPTICAL AXIS Ao

AXIS OF ROTATION
A OF FACE (HEAD)

# FIG. 14D

NARROWING DOWN OF NOSTRIL EXTRACTION CANDIDATES

90

NOSTRIL CANDIDATE
EXTRACTION AREA R

EP 2 573 712 B1

# FIG. 14E

EXTRACTION (BINARY PROCESSING) OF NOSTRIL CANDIDATES

# FIG. 14F

DETECTION OF NOSTRILS, CALCULATION OF CENTER LINE L

FACIAL CENTER LINE L — — AXIS OF ROTATION A

SMALL

90

LARGE

SMALL

SMALL

NOSTRILS

SMALL

EP 2 573 712 B1

# FIG. 15

FIG. 16

EYES (SMALL MOVEMENT AMOUNT)

EYES
(SMALL SHAPE CHANGE, LEFT/
RIGHT SYMMETRY)

NOSTRILS
(LARGE SHAPE CHANGE,
LEFT/RIGHT ASYMMETRY)

NOSTRILS
(LARGE MOVEMENT AMOUNT)

EP 2 573 712 B1

FIG. 17

EP 2 573 712 B1

```
        ╭─────────────────────╮
        │  SELECT OPERATION   │
        │ TARGET DEVICE (S4)  │
        ╰─────────────────────╯
                  │
        ╭─────────────────────╮  S111
        < VIEWING DIRECTION ? >
        ╰─────────────────────╯
```

LEFT        CENTRAL         FRONTAL              RIGHT        OTHER

| S115 | S112 | S113 | S114 |
|---|---|---|---|
| SELECT OPERATION TARGET DEVICE IN LEFTWARD DIRECTION | SELECT OPERATION TARGET DEVICE IN CENTRAL DIRECTION | SELECT OPERATION TARGET DEVICE IN FRONTAL DIRECTION | SELECT OPERATION TARGET DEVICE IN RIGHTWARD DIRECTION |

```
                  ( RETURN )
```

FIG. 18

```
       ╭──────────────────────────╮
       │  SELECT OPERATION TARGET │
       │ DEVICE IN CENTRAL DIRECTION│
       │          (S112)          │
       ╰──────────────────────────╯
                    │
       ╱──────────────────────────╲   S121
      ╱      PRESSED BUTTON ?       ╲
      ╲                            ╱
       ╲──────────────────────────╱
```

| UPPER | CENTRAL | LOWER | OTHER |
|---|---|---|---|
| S122 | S124 | S126 | |
| SELECT NAVIGATION DEVICE (ENERGIZE PILOT LAMP) | SELECT AUDIO DEVICE (ENERGIZE PILOT LAMP) | SELECT AIR CONDITIONER (ENERGIZE PILOT LAMP) | |
| S123 | S125 | S127 | |
| SET NAVIGATION DEVICE AS OPERATION TARGET DEVICE | SET AUDIO DEVICE AS OPERATION TARGET DEVICE | SET AIR CONDITIONER AS OPERATION TARGET DEVICE | |

```
              ╭──────────╮
              │  RETURN  │
              ╰──────────╯
```

FIG. 19

```
                    ╭─────────────────────────╮
                    │ SELECT OPERATION TARGET │
                    │ DEVICE IN FRONTAL DIRECTION │
                    │        (S113)           │
                    ╰─────────────────────────╯
                              │
                    ╱─────────────────────╲  S131
                    ╲    PRESSED BUTTON ?  ╱
                     ╲───────────────────╱
```

| UPPER | CENTRAL | LOWER | OTHER |
|---|---|---|---|
| S132 | S135 | S138 | |
| SELECT HUD (ENERGIZE PILOT LAMP) | SELECT HAZARD LAMP (ENERGIZE PILOT LAMP) | SELECT SEAT (ENERGIZE PILOT LAMP) | |
| S133 | S136 | | |
| TURN ON HUD | BLINK HAZARD LAMP | | |
| S134 | S137 | S139 | |
| SET HUD AS OPERATION TARGET DEVICE | SET HAZARD LAMP AS OPERATION TARGET DEVICE | SET SEAT AS OPERATION TARGET DEVICE | |

```
                    ╭─────────────╮
                    │   RETURN    │
                    ╰─────────────╯
```

# FIG. 20

```
          SELECT OPERATION TARGET
        DEVICE IN RIGHTWARD DIRECTION
                  (S114)
                    │
                    │ S141
          ┌─────────────────────┐
          │   PRESSED BUTTON ?   │
          └─────────────────────┘
```

**UPPER, LOWER**

S142
SELECT DRIVER SEAT-SIDE WINDOW (ENERGIZE PILOT LAMP)

S143
OPEN AND CLOSE DRIVER SEAT-SIDE WINDOW
UPPER → CLOSE
LOWER → OPEN

S144
SET DRIVER SEAT-SIDE WINDOW AS OPERATION TARGET DEVICE

**LEFT**

S145
FOLDED / DOOR MIRROR STATE ?
UNFOLDED

S146
SELECT LEFT AND RIGHT DOOR MIRRORS (ENERGIZE PILOT LAMP)

S147
FOLD LEFT AND RIGHT DOOR MIRRORS

S148
SELECT LEFT AND RIGHT DOOR MIRRORS (DE-ENERGIZE PILOT LAMP)

**RIGHT**

S149
UNFOLDED / DOOR MIRROR STATE ?
FOLDED

S150
SELECT LEFT AND RIGHT DOOR MIRRORS (ENERGIZE PILOT LAMP)

S151
UNFOLD LEFT AND RIGHT DOOR MIRRORS

S152
SELECT LEFT AND RIGHT DOOR MIRRORS (DE-ENERGIZE PILOT LAMP)

**CENTRAL**

S153
SELECT REAR LIGHT (ENERGIZE PILOT LAMP)

S154
ENERGIZE REAR LIGHT

S155
SET REAR LIGHT AS OPERATION TARGET DEVICE

```
                    │
              ┌──────────┐
              │  RETURN  │
              └──────────┘
```

FIG. 21

SELECT OPERATION TARGET DEVICE IN LEFTWARD DIRECTION (S115)

S161 PRESSED BUTTON ?

UPPER, LOWER

S162 SELECT FRONT PASSENGER SEAT-SIDE WINDOW (ENERGIZE PILOT LAMP)

S163 OPEN AND CLOSE FRONT PASSENGER SEAT-SIDE WINDOW UPPER → CLOSE LOWER → OPEN

S164 SET FRONT PASSENGER SEAT-SIDE WINDOW AS OPERATION TARGET DEVICE

LEFT

S165 DOOR MIRROR STATE ?

UNFOLDED

FOLDED

S166 SELECT LEFT AND RIGHT DOOR MIRRORS (ENERGIZE PILOT LAMP)

S167 UNFOLD LEFT AND RIGHT DOOR MIRRORS

S168 SELECT LEFT AND RIGHT DOOR MIRRORS (DE-ENERGIZE PILOT LAMP)

RIGHT

S169 DOOR MIRROR STATE ?

FOLDED

UNFOLDED

S170 SELECT LEFT AND RIGHT DOOR MIRRORS (ENERGIZE PILOT LAMP)

S171 FOLD LEFT AND RIGHT DOOR MIRRORS

S172 SELECT LEFT AND RIGHT DOOR MIRRORS (DE-ENERGIZE PILOT LAMP)

CENTRAL

S173 SELECT REAR LIGHT (ENERGIZE PILOT LAMP)

S174 ENERGIZE REAR LIGHT

S175 SET REAR LIGHT AS OPERATION TARGET DEVICE

RETURN

FIG. 22

OPERATE OPERATION TARGET
DEVICE (S5)

OPERATION TARGET DEVICE
BEING SELECTED ? —— S181

FRONT PASSENGER SEAT-SIDE WINDOW
S190
OPERATE FRONT PASSENGER SEAT-SIDE WINDOW

NAVIGATION DEVICE
S182
OPERATE NAVIGATION DEVICE

AIR CONDITIONER
S184
OPERATE AIR CONDITIONER

HAZARD LAMP
S186
OPERATE HAZARD LAMP

DRIVER SEAT-SIDE WINDOW
S189
OPERATE DRIVER SEAT-SIDE WINDOW

REAR LIGHT (LEFT OR RIGHT)
S188
OPERATE REAR LIGHT

AUDIO DEVICE
S183
OPERATE AUDIO DEVICE

HUD
S185
OPERATE HUD

SEAT
S187
OPERATE SEAT

RETURN

EP 2 573 712 B1

# FIG. 23

EP 2 573 712 B1

```
        ┌─────────────────────────────┐
        │  OPERATE NAVIGATION DEVICE   │
        │           (S182)             │
        └─────────────────────────────┘
                      │
        ┌─────────────────────────────┐  S201
        <       PRESSED BUTTON ?       >
        └─────────────────────────────┘
                      │
   ┌──────────────────┼──────────────────────┐
 UPPER,            LEFT,                   CENTRAL
 LOWER             RIGHT
        S202               S203                       S204
┌──────────────────┐ ┌──────────────────────┐ ┌──────────────────────┐
│   CHANGE SCALE   │ │ SWITCH DISPLAY       │ │ DE-ENERGIZE PILOT    │
│ UPPER → INCREASE │ │ DIRECTION            │ │ LAMP                 │
│   SCALE          │ │ LEFT → NORTHWARD     │ │                      │
│ LOWER → REDUCE   │ │ RIGHT → TRAVELING    │ └──────────────────────┘
│   SCALE          │ │   DIRECTION          │          │
└──────────────────┘ └──────────────────────┘        S205
                                            ┌──────────────────────┐
                                            │ FINISH DEVICE        │
                                            │ SELECTION            │
                                            └──────────────────────┘
        │                  │                          │
        └──────────────────┼──────────────────────────┘
                      ┌──────────┐
                      │  RETURN  │
                      └──────────┘
```

FIG. 24

```
        ╭─────────────────────────╮
        │   OPERATE AUDIO DEVICE   │
        │         (S183)           │
        ╰─────────────────────────╯
                    │
        ╱───────────────────────────╲   S211
       ⟨     PRESSED BUTTON ?         ⟩
        ╲───────────────────────────╱
                    │
    ┌───────────────┼──────────────────────────┐
 UPPER,          LEFT,                    CENTRAL
 LOWER           RIGHT
        S212              S213                        S214
┌─────────────────┐ ┌─────────────────┐  ┌─────────────────────────┐
│  ADJUST VOLUME  │ │SELECT MUSIC/STATION│ │ DE-ENERGIZE PILOT LAMP │
│UPPER → INCREASE VOLUME│ │ LEFT → FORMER │  │                         │
│LOWER → REDUCE VOLUME│ │ RIGHT → NEXT  │  └─────────────────────────┘
└─────────────────┘ └─────────────────┘
                                                     S215
                                        ┌─────────────────────────┐
                                        │ FINISH DEVICE SELECTION │
                                        └─────────────────────────┘
    │               │                          │
    └───────────────┼──────────────────────────┘
                ╭─────────╮
                │ RETURN  │
                ╰─────────╯
```

EP 2 573 712 B1

FIG. 25

OPERATE AIR CONDITIONER
(S184)

PRESSED BUTTON ?    S221

UPPER,
LOWER

LEFT,
RIGHT

CENTRAL

S222
ADJUST TEMPERATURE
UPPER → INCREASE TEMPERATURE
LOWER → REDUCE TEMPERATURE

S223
ADJUST AIR VOLUME SETTING
LEFT → REDUCE AIR VOLUME SETTING
RIGHT → INCREASE AIR VOLUME SETTING

S224
DE-ENERGIZE PILOT LAMP

S225
FINISH DEVICE SELECTION

RETURN

EP 2 573 712 B1

# FIG. 26

```
            ┌──────────────────────┐
            │     OPERATE HUD      │
            │       (S185)         │
            └──────────┬───────────┘
                       │
        ┌──────────────┴──────────────┐  S231
        │       PRESSED BUTTON ?       │
        └──────────────┬──────────────┘
```

UPPER, LOWER · CENTRAL · OTHER

| | | |
|---|---|---|
| S232 | S233 | |
| SWITCH DISPLAY INFORMATION | DE-ENERGIZE PILOT LAMP | |
| | S234 | |
| | TURN OFF HUD | |
| | S235 | |
| | FINISH DEVICE SELECTION | |

```
            ┌──────────────────────┐
            │        RETURN        │
            └──────────────────────┘
```

EP 2 573 712 B1

# FIG. 27

```
        ┌──────────────────────────┐
        │  OPERATE HAZARD LAMP      │
        │        (S186)            │
        └──────────────────────────┘
                     │
                     │                    S241
        ╱────────────────────────╲              OTHER
       ⟨    PRESSED BUTTON ?       ⟩──────────────────┐
        ╲────────────────────────╱                    │
                     │ CENTRAL                         │
                     │              S242               │
        ┌──────────────────────────┐                  │
        │  DE-ENERGIZE HAZARD LAMP  │                  │
        └──────────────────────────┘                  │
                     │              S243               │
        ┌──────────────────────────┐                  │
        │  DE-ENERGIZE PILOT LAMP   │                  │
        └──────────────────────────┘                  │
                     │              S244               │
        ┌──────────────────────────┐                  │
        │  FINISH DEVICE SELECTION  │                  │
        └──────────────────────────┘                  │
                     │                                 │
                     │←────────────────────────────────┘
              ┌─────────────┐
              │   RETURN    │
              └─────────────┘
```

EP 2 573 712 B1

FIG. 28

```
           ┌─────────────────────┐
           │   OPERATE SEAT      │
           │     (S187)          │
           └──────────┬──────────┘
                      │
           ┌──────────┴──────────┐  S251
           <   PRESSED BUTTON ?  >
           └──────────┬──────────┘
```

UPPER, LOWER                LEFT, RIGHT                    CENTRAL

S252

SLIDE FORWARDLY AND
REARWARDLY
UPPER → FORWARD
LOWER → REARWARD

S253

ADJUST RECLINING ANGLE
LEFT → REDUCE RECLINING ANGLE
RIGHT → INCREASE RECLINING ANGLE

S254

DE-ENERGIZE PILOT LAMP

S255

FINISH DEVICE SELECTION

RETURN

EP 2 573 712 B1

# FIG. 29

```
        OPERATE REAR LIGHT
              (S188)
                |
        ⟨ PRESSED BUTTON ? ⟩ S261 ───── OTHER ──┐
                |                                 |
            CENTRAL                               |
                |                     S262        |
        ┌──────────────────────┐                 |
        │ DE-ENERGIZE REAR LIGHT│                 |
        └──────────────────────┘                 |
                |                     S263        |
        ┌──────────────────────┐                 |
        │ DE-ENERGIZE PILOT LAMP│                 |
        └──────────────────────┘                 |
                |                     S264        |
        ┌──────────────────────┐                 |
        │ FINISH DEVICE SELECTION│                |
        └──────────────────────┘                 |
                |←───────────────────────────────┘
             ( RETURN )
```

EP 2 573 712 B1

FIG. 30

OPERATE DRIVER SEAT-SIDE
WINDOW (S189)

PRESSED BUTTON ?  S271

UPPER,
LOWER                    CENTRAL                          OTHER

OPEN AND CLOSE DRIVER SEAT-    S272        DE-ENERGIZE PILOT LAMP    S273
SIDE WINDOW
UPPER → CLOSE
LOWER → OPEN                              FINISH DEVICE SELECTION   S274

RETURN

EP 2 573 712 B1

FIG. 31

OPERATE FRONT PASSENGER
SEAT-SIDE WINDOW (S190)

PRESSED BUTTON ?    S281

UPPER,
LOWER          CENTRAL                    OTHER

OPEN AND CLOSE FRONT          S282        DE-ENERGIZE PILOT LAMP    S283
PASSENGER SEAT-SIDE WINDOW
UPPER → CLOSE                             FINISH DEVICE SELECTION    S284
LOWER → OPEN

RETURN

EP 2 573 712 B1

FIG. 32

EP 2 573 712 B1

FIG. 33

EP 2 573 712 B1

## REFERENCES CITED IN THE DESCRIPTION

### Patent documents cited in the description

- US 20100014759 A
- US 20100014759 A1
- US 5008946 A
- US 20080137959 A1
- JP 2010105417 A

### Non-patent literature cited in the description

- **SHUNJI KATAHARA ; MASAYOSHI AOKI.** Motion Estimation of Driver's Head from Nostrils Detection. *ACCV2002: The 5th Asian Conference on Computer Vision, 23-25 January 2002*